# DEMANDE DE BREVET EUROPEEN

(11) **EP 4 342 857 A1**
(43) Date de publication de la demande: **27.03.2024**
(21) Numéro de dépôt: 22306392.6
(22) Date de dépôt: 22.09.2022
(51) Int. Cl.: C03B 5/03, C03B 5/04, C03B 5/182, C03B 5/20, C03B 5/235, C03B 3/00

(54) **FOUR HYDRIDE DE FABRICATION DE VERRE PRÉSENTANT EN PARTICULIER UNE FLEXIBILITÉ ÉNERGÉTIQUE**

(71) Demandeur: Saint-Gobain Glass France, 92400 Courbevoie (FR)
(72) Inventeur: SAGET, Aurélien, COURBEVOIE (FR); COMBES, Jean-Marie, COURBEVOIE (FR); LE VERGE, Arnaud, COURBEVOIE (FR); LITOUT, Yves, COURBEVOIE (FR); POUSSINEAU, Nicole, COURBEVOIE (FR)
(74) Mandataire: Saint-Gobain Recherche

(57) **Abrégé**

L'invention concerne un four hydride (10) pour la fabrication de verre, notamment pour alimenter une unité de flottage, ledit four hybride (10) d'axe longitudinal (A-A') comportant :
- au moins une zone (110) de fusion électrique comportant des électrodes (115) qui est apte à être alimentée en mélange vitrifiable par un premier dispositif (610) d'enfournement ;
- une zone (120) de fusion à flammes comportant au moins des brûleurs (125) aériens qui est apte à être alimentée en mélange vitrifiable par un deuxième dispositif (620) d'enfournement, distinct dudit au moins un premier dispositif (610) d'enfournement,
dans lequel ladite au moins une zone (110) de fusion électrique et la zone (120) de fusion à flammes sont configurées pour pouvoir fonctionner indépendamment l'une de l'autre de manière à permettre une utilisation sélective de l'une et/ou l'autre desdites zones de fusion (110, 120) qui confère ainsi au four (10) une flexibilité énergétique.

## Description

### DOMAINE TECHNIQUE DE L'INVENTION

L'invention concerne un four hydride de fabrication de verre présentant en particulier une flexibilité énergétique.

L'invention concerne plus particulièrement un four hydride de fabrication de verre comportant notamment au moins une zone de fusion électrique et une zone de fusion à flammes qui, indépendantes l'une de l'autre, sont susceptibles d'être utilisées sélectivement, conjointement ou non, grâce à quoi le four présente une flexibilité énergétique en permettant de choisir au moins une source d'énergie comme l'électricité et/ou un combustible pour la fusion du mélange vitrifiable afin d'obtenir du verre fondu qui s'écoule ensuite dans une zone d'affinage à deux courroies de convection de manière à obtenir, en quantité idoine, un verre de haute qualité.

En effet, le four hybride selon l'invention est non seulement apte à permettre une flexibilité énergétique mais également à délivrer un verre de haute qualité présentant moins de 0,1 bulle par litre et cela avec une tirée d'au moins 400 tonnes par jour, préférentiellement entre 600 et 900 tonnes par jour, voire de 1000 tonnes par jour ou plus, notamment pour alimenter une unité de flottage du verre sur un bain de métal fondu (ou « float » en anglais) destinée à fabriquer du verre plat.

### ÉTAT DE LA TECHNIQUE

On connaît de l'état de la technique différents exemples de conception de fours pour la fabrication de verre qui dépendent notamment du produit à fabriquer, c'est-à-dire de la mise en forme finale du verre.

Ainsi, on distingue différentes conceptions de four selon que la production envisagée concerne des fibres de verre, le formage industriel de verre creux ou encore celui de verre plat.

L'un des enjeux industriels dans la conception des fours de verrerie est de pouvoir obtenir un verre dont les exigences, en matière de qualité, dépendent du produit. A cet égard la production de verre plat est comparativement l'une des plus exigeante.

Produit en très grande quantité, le verre plat est utilisé dans de nombreuses applications en raison de son caractère polyvalent, notamment largement utilisé dans les secteurs de l'électronique (écrans plats) ou encore de la construction et de l'automobile dans lesquels ce verre est susceptible d'être transformé suivant une grande variété de technique (bombage, trempe, etc.), constituant ainsi un verre de base pour tout un ensemble de produits verriers.

A proportion des enjeux tant de qualité que de quantité, la présente invention vise tout particulièrement la fabrication de verre pour le formage industriel d'un tel verre plat, lequel verre est conventionnellement obtenu au moyen d'une unité de flottage du verre sur un bain de métal fondu, généralement de l'étain, raison pour laquelle un tel verre plat est encore appelé verre flotté ou « float » selon le terme anglais.

Pour la fabrication de verre plat, il est attendu de pouvoir alimenter l'unité de flottage ou « float » avec un verre de haute qualité, c'est-à-dire un verre renfermant le moins d'infondus et de bulles possibles, soit généralement un verre présentant moins de 0,5 bulle / litre.

En effet, la qualité du verre est notamment, mais non exclusivement, déterminée en fonction du nombre de bulle(s) présente(s) dans le verre qui est exprimé en « bulle par litre ». Ainsi, la qualité d'un verre est considérée comme d'autant plus élevée que le nombre de bulle(s) par litre présente(s) dans le verre est particulièrement bas, voire infime.

Par ailleurs, on rappelle que la présence de bulles (ou de défauts gazeux) dans le verre est inhérente au procédé de fabrication du verre dans le processus d'élaboration duquel on distingue généralement trois étapes ou phases successives : la fusion, l'affinage et l'homogénéisation et le conditionnement thermique du verre.

La présence de bulles dans le verre résulte en effet de l'étape de fusion au cours de laquelle est fondu un mélange vitrifiable, aussi appelé « composition ». Le mélange vitrifiable est constitué de matières premières comportant par exemple un mélange de sable, de calcaire (carbonate de calcium), de carbonate de soude, de dolomie pour la fabrication d'un verre sodocalcique (le verre le plus utilisé pour la fabrication de verre plat), et auxquelles est avantageusement ajouté du calcin (encore appelé groisil) constitué de débris de verre afin notamment de favoriser la fusion.

Le mélange vitrifiable est transformé en une masse liquide dans laquelle se dissolvent même les particules les moins miscibles, c'est-à-dire les plus riches en dioxyde de silicium ou silice (SiO₂) et pauvres en oxyde de sodium (Na₂O).

Le carbonate de sodium (Na₂CO₃) commence à réagir avec les grains de sable à partir de 775°C en dégageant alors des bulles de dioxyde de carbone (CO₂) dans un liquide devenant de plus en plus visqueux à mesure que le carbonate se transforme en silicate. De même, la transformation des grains de calcaire en chaux et la décomposition de la dolomie provoquent également l'émission de dioxyde de carbone (CO₂).

L'étape de fusion est achevée lorsqu'il n'y a plus de particules solides dans le liquide de verre fondu devenu très visqueux mais qui, à ce stade du procédé de fabrication, est alors rempli de bulles d'air et de gaz.

L'étape d'affinage et d'homogénéisation permet alors l'élimination desdites bulles présentes dans le verre fondu. De manière connue, on utilise avantageusement au cours de cette étape des « affinants », c'est-à-dire des substances en faible concentration qui, en se décomposant à la température de fusion du bain, fournissent des gaz qui font gonfler les bulles afin d'en accélérer la montée vers la surface du verre.

L'étape de conditionnement thermique du procédé de fabrication permet ensuite d'abaisser la température du verre dès lors que, au début de l'opération de mise en forme, la viscosité du verre doit généralement être au moins dix fois plus élevée que pendant l'affinage.

Il existe bien évidemment une correspondance entre chacune des étapes de fabrication du verre qui viennent d'être décrite et la structure d'un four destiné à leur mise en œuvre.

Généralement, un tel four pour la fabrication de verre comporte ainsi successivement une zone de fusion dans laquelle a lieu la transformation par fusion du mélange vitrifiable en un bain de verre puis une zone d'affinage et d'homogénéisation pour éliminer les bulles du verre et enfin une zone de conditionnement thermique servant à refroidir le verre de manière à l'amener à la température de formage, bien inférieure aux températures subies par le verre au cours de son élaboration.

On retiendra notamment du processus d'élaboration du verre qui vient d'être rappelé que l'étape de fusion s'accompagne d'émission de dioxyde de carbone (CO₂), soit l'un des principaux gaz à effet de serre impliqué dans le changement climatique.

C'est la raison pour laquelle on cherche notamment à utiliser une part toujours plus importante de calcin afin de réduire ces émissions directes de dioxyde de carbone (CO₂), ainsi que les émissions indirectes de dioxyde de carbone (CO₂) liées aux matières premières du mélange vitrifiable.

En effet, hormis la fabrication d'un verre de haute qualité, ainsi que les défis industriels d'une forte productivité avec un coût de construction et d'exploitation des fours les plus faibles possibles, l'un des autres enjeux majeurs auquel l'industrie du verre doit faire face est actuellement écologique, à savoir la nécessité de trouver des solutions pour réduire l'empreinte carbone (en anglais « CO₂ footprint ») liée au processus d'élaboration du verre.

Pour parvenir à atteindre un objectif de neutralité carbone, une approche globale du processus est privilégiée en cherchant à agir sur les multiples leviers pour réduire tant les émissions directes lors de la fabrication que les émissions indirectes ou encore les émissions en amont et en aval de la chaîne de valeur, par exemple celles liées au transport des matériaux en amont puis du produit en aval.

Dès lors, les multiples leviers comprennent la conception des produits et la composition des matériaux, l'amélioration de l'efficacité énergétique des procédés industriels, l'utilisation d'énergies renouvelables et décarbonées, la collaboration avec les fournisseurs de matières premières et les transporteurs afin de réduire leurs émissions, et enfin, l'exploration des technologies de capture et de séquestration des émissions résiduelles.

Dans les émissions directes, outre celles inhérentes au processus d'élaboration du verre rappelées précédemment, le type d'énergie(s) utilisée(s) tout particulièrement pour l'étape de fusion à haute température (plus de 1500°C) représente la part la plus importante dans l'empreinte carbone du processus d'élaboration du verre puisqu'il s'agit généralement d'une énergie fossile, le plus souvent du gaz naturel, voire des produits pétroliers tels que du fioul.

Par conséquent, la recherche de nouvelles conceptions de four doit non seulement permettre de répondre aux enjeux industriels en lien avec la qualité du verre mais aussi de réduire l'empreinte carbone du processus d'élaboration du verre, tant les émissions directes qu'indirectes de dioxyde de carbone (CO₂), et cela en réduisant notamment l'utilisation d'énergie(s) fossile(s).

La fabrication du verre est réalisée dans des fours qui n'ont eu de cesse d'évoluer depuis les premiers fours à pot (ou creuset) en passant par le four Siemens qui est habituellement considéré comme l'ancêtre des grands fours de verrerie à coulée continue d'aujourd'hui, à l'instar des fours à brûleurs transversaux pouvant produire jusqu'à 1200 tonnes de verre flotté par jour.

Le choix de l'énergie utilisée pour la fusion conduit ainsi à distinguer principalement deux grandes conceptions de four pour la fabrication du verre, respectivement les fours à flammes et les fours électriques.

Selon la première conception, les fours à flammes utilisent généralement des combustibles fossiles, notamment du gaz naturel pour les brûleurs, l'énergie thermique est ainsi transmise au verre par échange thermique entre les flammes et la surface du bain de verre.

Les fours à brûleurs transversaux précités sont un exemple de four selon cette première conception et sont largement exploités pour alimenter en verre fondu une unité de flottage ou « float » destinée à fabriquer du verre plat.

Selon la deuxième conception, les fours électriques sont des fours dans lesquels l'énergie thermique est produite par effet Joule dans la masse du verre en fusion.

En effet, substance isolante à température ambiante, le verre devient électriquement conducteur à haute température de sorte que l'on peut envisager d'utiliser l'effet Joule au sein même des fontes de verre pour les chauffer.

Toutefois, les fours électriques sont par exemple utilisés pour l'élaboration de verres particuliers tels que du verre opale au fluor ou du cristal au plomb ou encore sont communément utilisés pour la fabrication de fibres de verre pour de l'isolation thermique.

En effet, il est communément admis par l'Homme du métier que de tels fours électriques ne sont pas en mesure de permettre d'alimenter, ni en quantité, ni surtout en qualité de verre (pour rappel moins de 0,5 bulle par litre), une unité de flottage du verre sur un bain de métal fondu destinée à la fabrication de verre plat.

Les fours électriques de l'état de la technique connus de la Demanderesse sont tout au plus à même de délivrer une tirée de 200 à 250 tonnes par jour d'un verre qui présente au mieux quelques centaines de bulles par litre, plus généralement quelques milliers, ce qui peut éventuellement convenir pour le formage de verres creux, typiquement des bouteilles, mais nullement pour la fabrication de verre plat et par conséquent l'alimentation d'une unité de flottage.

C'est la raison pour laquelle, les fours à flammes (comme les fours à brûleurs transversaux) demeurent aujourd'hui les seuls fours capables d'alimenter une telle unité de flottage du verre.

Or, les fours à flammes reposent sur l'utilisation d'énergies fossiles essentiellement du gaz naturel pour le combustible de sorte que leur bilan carbone est peu compatible avec les objectifs de réduction des émissions de dioxyde de carbone (CO₂), soit de l'empreinte carbone du processus d'élaboration du verre.

Pour compléter l'exposé des conceptions de four pour la fabrication de verre selon l'état de la technique, on citera une troisième conception de four, ayant connue récemment des évolutions pour faire face notamment à l'enjeu écologique de réduction des émissions de dioxyde de carbone (CO₂).

Cette troisième conception de four est basée sur un four à flammes mais utilise cependant un chauffage d'appoint électrique, notamment pour augmenter momentanément la production du four ou encore pour améliorer la qualité du verre.

Par conséquent, de tels fours sont encore appelés « fours à flammes avec un appoint électrique ».

Les fours selon cette troisième conception combinent ainsi plusieurs sources d'énergies, respectivement fossile et électrique, et sont pour cette raison aussi appelés fours « hybrides ».

L'adjonction d'un chauffage électrique en appoint permet d'améliorer la capacité de fusion de fours à flammes laquelle est limitée par le transfert thermique se produisant entre la flamme et la surface du bain de verre.

Néanmoins, le fonctionnement d'un tel four hybride repose toujours principalement sur l'utilisation d'un combustible fossile, typiquement du gaz, de sorte que l'impact finalement obtenu sur l'amélioration de l'empreinte carbone du processus d'élaboration du verre reste limité. En effet, l'électricité n'est utilisée ici qu'en appoint de sorte que son impact est proportionnel.

De surcroît, pour améliorer effectivement l'empreinte carbone, l'électricité utilisée doit encore être une électricité dite « verte », c'est-à-dire une électricité qui est produite à partir de sources d'énergies renouvelables et décarbonées.

On notera que la remarque précédente sur l'électricité vaut à l'identique pour les combustibles tels que le bio-méthane ou l'hydrogène susceptibles d'être utilisés en remplacement du gaz naturel dans les brûleurs.

Si l'amélioration de l'empreinte carbone dans le processus d'élaboration du verre est un enjeu crucial comme en témoignent les engagements des acteurs du marché à fabriquer du verre « *zéro carbone* », la maîtrise des coûts de fabrication n'en demeure pas moins également une préoccupation majeure.

Or, la fabrication du verre étant particulièrement énergivore et tout particulièrement l'étape de fusion du mélange vitrifiable, le choix de l'énergie utilisée dans un four de fabrication de verre s'avère être au final un élément déterminant tant économiquement, qu'écologiquement.

D'une manière générale, les coûts de l'énergie suivent la loi du marché, variant en fonction de l'offre et de la demande, étant toutefois observé que selon le type d'énergie (gaz, pétrole, etc.) utilisée directement ou transformée en électricité, les ressources sont inégalement réparties sur la planète de sorte que des enjeux géopolitiques tels qu'une guerre sont notamment susceptibles de les impacter fortement.

On comprendra dès lors que pour la conception de nouveaux fours pour la fabrication de verre, les choix énergétiques revêtent une grande importance et se heurtent à de très nombreuses incertitudes, notamment des risques économiques en lien avec les coûts de l'énergie, voire leur disponibilité en quantité suffisante, en particulier pour pouvoir répondre aux enjeux écologiques liés à la fabrication de verre dit « zéro carbone ».

Le but de l'invention est en outre de proposer une nouvelle conception de four pour la fabrication de verre permettant de limiter les risques économiques liés au choix énergétique, tout en étant à même de délivrer un verre qui soit de haute qualité d'une part et en quantité requise d'autre part, en particulier apte à alimenter une unité de flottage du verre destinée à fabriquer du verre plat, et permettant d'obtenir une réduction des émissions de dioxyde de carbone (CO₂) liées au processus d'élaboration du verre.

### BREF RESUME DE L'INVENTION

Dans ce but, l'invention propose un four hybride pour la fabrication de verre, notamment pour alimenter une unité de flottage du verre sur un bain de métal fondu, ledit four hybride d'axe longitudinal comportant :
- au moins une zone de fusion électrique qui est apte à être alimentée en mélange vitrifiable par au moins un premier dispositif d'enfournement et qui comporte des électrodes pour fondre ledit mélange vitrifiable ;
- une zone de fusion à flammes qui, distincte de ladite au moins une zone de fusion électrique, est apte à être alimentée en mélange vitrifiable par au moins un deuxième dispositif d'enfournement et qui comporte au moins des brûleurs aériens pour fondre ledit mélange vitrifiable, lesdits brûleurs aériens étant agencés au-dessus de la surface du verre fondu,
dans lequel ladite au moins une zone de fusion électrique et ladite zone de fusion à flammes sont configurées pour pouvoir fonctionner indépendamment l'une de l'autre de manière à permettre une utilisation sélective de l'une et/ou l'autre desdites zones de fusion afin de conférer au four une flexibilité énergétique,
- une zone d'affinage du verre fondu délivré par ladite au moins une zone de fusion électrique et/ou ladite zone de fusion à flammes, ladite zone d'affinage étant configurée pour comporter une première courroie de convection et une deuxième courroie de convection ; et
- une zone de refroidissement du verre comportant un bassin de conditionnement qui est parcouru par la deuxième courroie de convection et qui est relié à au moins un canal d'écoulement du verre.

Avantageusement, le four hybride selon l'invention se caractérise par le fait de comporter au moins deux zones de fusion qui, distinctes et indépendantes l'une de l'autre, sont aptes à fonctionner sélectivement avec une source d'énergie différente.

Avantageusement, le four hybride comporte respectivement au moins une première zone de fusion utilisant une première énergie et une deuxième zone de fusion utilisant une deuxième source d'énergie qui est différente de la première source d'énergie, grâce à quoi il est possible d'utiliser sélectivement une première énergie et/ou une deuxième énergie au bénéfice notamment d'une flexibilité énergique pour la fabrication du verre.

De préférence, la première énergie est par exemple de l'électricité et la deuxième énergie est un combustible.

Avantageusement, la conception de four hybride selon l'invention permet d'avoir une totale flexibilité énergétique, avec la possibilité d'utiliser pour la fusion du mélange vitrifiable soit l'une seulement desdites au moins une zone de fusion électrique et zone de fusion à flammes du four, soit conjointement lesdites zones de fusion électrique et à flammes dans des proportions paramétrables.

Ainsi, le four hybride offre sur le plan du choix de l'énergie utilisée pour la fusion du mélange vitrifiable plusieurs modes de fonctionnement, soit plus généralement un fonctionnement de type multimode, le mode de fonctionnement du four hybride sélectionné pouvant être déterminé en fonction d'au moins un paramètre de sélection comprenant un ou plusieurs critères.

Pour chaque fabrication de verre, on peut à un instant donné vouloir privilégier au moins un critère, voire rechercher le meilleur compromis selon plusieurs critères tels que par exemple les critères économique, écologique, voire technique.

Le critère économique du coût de l'énergie n'est donc qu'un des critères susceptibles d'être pris en compte lors du choix, en effet un critère écologique considérant notamment l'empreinte carbone (CO₂) de l'énergie utilisée, voire un ou des critères techniques le sont également.

Lorsque lesdites zones de fusion électrique et à flammes sont utilisées ensemble, il existe là encore une flexibilité dès lors que la proportion du verre fondu susceptible d'être produite par chacune est librement paramétrable, notamment en agissant sur les dispositifs d'enfournement associés et les moyens de chauffe pour la fusion que sont les électrodes et les brûleurs aériens.

Ainsi, l'électricité utilisée pour alimenter les électrodes et le combustible pour alimenter les brûleurs aériens peuvent intervenir ou non à part égale, par exemple dans un rapport de 50/50 (soit 50% chacune). L'électricité peut également être prépondérante par rapport au combustible (ou inversement), par exemple avec un rapport de 80/20 (soit 80% d'électricité et 20% de combustible) ou encore tout autre rapport tel que 70/30 ou 60/40.

Dans un tel mode fonctionnement, dit hybride, les dispositifs d'enfournement respectivement associés à chacune desdites zones de fusion électrique et à flammes les alimentent alors en mélange vitrifiable à proportion, sélectivement, et ce faisant les dispositifs d'enfournement participent également à l'obtention de la flexibilité énergétique d'un four hybride selon l'invention.

Dans un four hybride selon l'invention, la tirée maximale de ladite au moins une zone de fusion électrique et de même celle de la zone de fusion à flammes sont déterminées à l'origine par construction et peuvent chacune être dimensionnée pour pouvoir délivrer une tirée qui soit égale à la tirée nominale souhaitée pour le four et cela afin de pouvoir atteindre cette tirée nominale même lorsque l'une seulement desdites zones de fusion est utilisée, c'est-à-dire une seule énergie pour la fusion, électricité ou combustible.

Cependant, il est également possible de dimensionner au moins l'une desdites zones de fusion du four de manière que sa tirée maximale soit inférieure à la tirée nominale du four au bénéfice alors d'une réduction des dimensions de ladite au moins une zone de fusion. Dans ce cas, la tirée nominale du four n'est alors susceptible d'être atteinte qu'en utilisant conjointement les zones de fusion électrique et à flammes, ou en utilisant l'autre zone de fusion si celle-ci est dimensionnée pour pouvoir délivrer une tirée maximale égale à la tirée nominale du four.

Grâce à la conception du four hybride selon l'invention, offrant un tel fonctionnement multimode garant d'une flexibilité énergétique, il est possible de réduire de manière importante les risques associés au choix d'une énergie donnée dont les coûts, la disponibilité, sont susceptibles de varier fortement sur les marchés, notamment en fonction du rapport offre/demande, pendant toute la durée d'exploitation du four.

Par comparaison avec l'invention, on comprendra que dans un four selon l'état de la technique dans lequel la fusion du mélange vitrifiable est obtenue avec une seule énergie, typiquement un combustible pour la première conception ou de l'électricité pour la deuxième conception, il n'existe aucune flexibilité énergétique.

Ainsi, en cas d'augmentation très importante des coûts de l'énergie utilisée pour la fusion ou encore d'une indisponibilité de celle-ci, les conséquences peuvent aller jusqu'à remettre en cause la production de verre, conduire à un arrêt du four.

Cela vaut également pour un four hybride selon la troisième conception bien qu'un combustible et de l'électricité (en appoint) y soient utilisés, la fabrication du verre fondu ne pouvant notamment pas être obtenue avec une seule énergie dans un tel four, en particulier pas uniquement avec de l'électricité.

D'une manière générale, on rappelle que la construction d'un four pour la production de verre est un investissement très coûteux et que la durée d'exploitation d'un tel four pour l'amortir est longue, généralement sur plus d'une vingtaine d'années, ceci pesant aussi nécessairement sur les choix opérés lors de la construction d'un four.

Toutefois, la flexibilité énergique offerte par un four hybride selon l'invention n'est que l'un des avantages dès lors que la conception du four permet également d'obtenir un verre de très haute qualité et de surcroît fabriqué en quantité requise pour pouvoir alimenter une unité de flottage destinée à fabriquer du verre plat, soit l'application de loin la plus exigeante.

Avantageusement, la disposition en série l'une par rapport à l'autre de ladite au moins une zone de fusion électrique et de la zone de fusion à flammes favorise le mélange du verre fondu délivré par chacune lorsque lesdites zones sont utilisées conjointement dans le mode de fonctionnement hybride.

Outre ladite disposition en série, les deux courroies de convection du verre contribuent également à l'obtention d'un verre de très haute qualité, présentant moins de 0,1 bulle par litre, en particulier la première courroie de convection qui s'étend dans la zone de fusion à flammes et la zone d'affinage.

Dans un four hybride selon l'invention, grâce audit dispositif de séparation anti-retour du verre agencé dans le corset, aucune courroie de convection ou boucle de recirculation du verre ne s'étend depuis la zone de fusion à flammes vers la zone de fusion électrique, que la zone de fusion électrique soit ou non utilisée.

Par comparaison, une gorge immergée reliant une zone de fusion électrique à une zone de fusion à flammes ne serait pas à même d'assurer une telle fonction d'anti-retour du verre dans un four. En effet, un courant de retour du verre existe nécessairement dans une gorge, notamment en raison de l'usure des matériaux.

De plus, le verre s'écoulant dans une gorge n'est pas en contact avec l'atmosphère de sorte qu'il n'est en outre pas susceptible d'être refroidi de manière contrôlée et variable en surface, en particulier par des moyens de refroidissement tels qu'un dispositif de refroidissement par circulation d'air.

Par comparaison à une gorge dont la section est limitée par construction, le corset permet de surcroît un écoulement du verre avec une tirée apte à permettre d'alimenter une unité de flottage.

Un refroidissement du verre tel qu'obtenu dans le corset (avec ou sans moyens de refroidissement) est particulièrement avantageux lorsque le verre est produit par fusion électrique car le verre fondu présente généralement une température élevée qu'il convient de réduire.

D'autres caractéristiques avantageuses de l'invention sont notamment l'objet des revendications dépendantes.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :

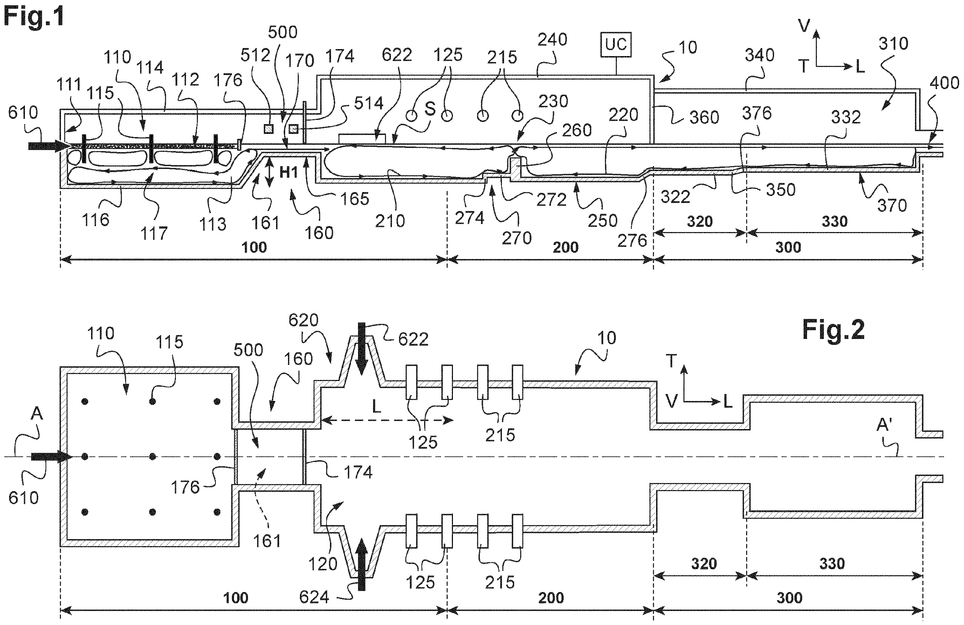

- la figure 1 est une vue en coupe par un plan vertical selon l'axe longitudinal A-A' du four qui représente un four hybride pour la fabrication de verre selon un premier mode de réalisation de l'invention comportant une zone de fusion électrique et une zone de fusion à flammes indépendantes et qui illustre ladite zone de fusion électrique reliée par un corset à la zone de fusion à flammes laquelle est reliée à une zone d'affinage comportant une première courroie de convection et une deuxième courroie de convection elle-même reliée ensuite à une zone de refroidissement parcourue par ladite deuxième courroie de convection ;
- la figure 2 est une vue en coupe par un plan horizontal qui représente le four selon le premier mode de réalisation vu de dessus et qui illustre en outre un premier dispositif d'enfournement apte à alimenter la zone de fusion électrique et un deuxième dispositif d'enfournement apte à alimenter la zone de fusion à flammes lesquelles zones de fusion sont reliées l'une à l'autre par le corset comportant un dispositif de séparation « anti-retour » configuré pour empêcher un retour du verre fondu de la zone de fusion à flammes vers la zone de fusion électrique ;

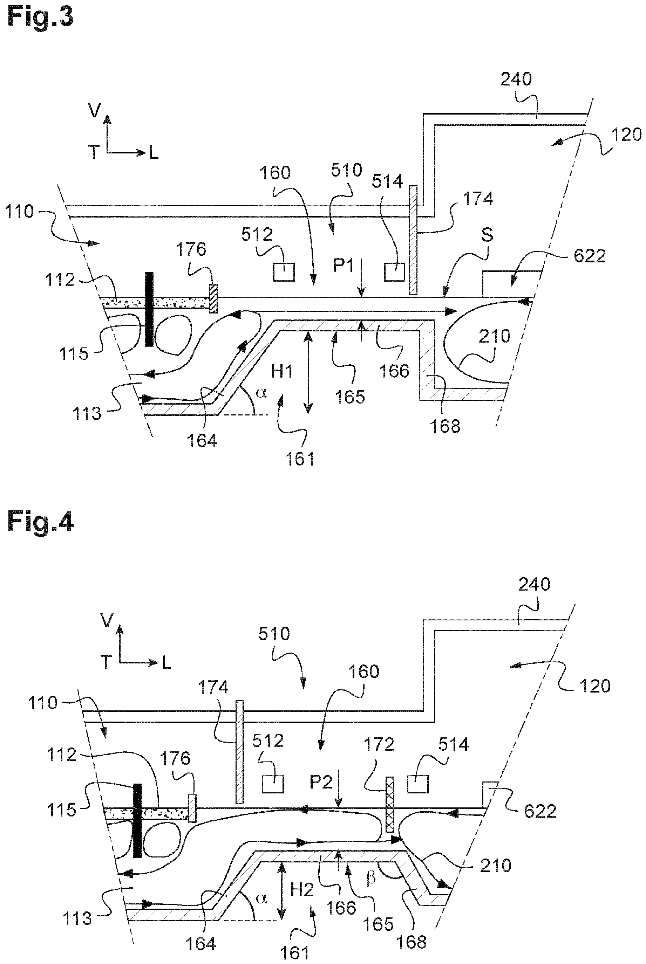

- la figure 3 est une vue en coupe qui représente en détail le corset du four hybride selon la figure 1 et qui illustre un exemple de réalisation préféré dudit dispositif de séparation « anti-retour » du verre constitué par une élévation de la sole du corset ;
- la figure 4 est une vue en coupe qui, analogue à la figure 3, représente en détail le corset du four hybride et qui illustre un autre exemple de réalisation dudit dispositif de séparation « anti-retour » du verre comportant un barrage mobile et une élévation de la sole du corset ;

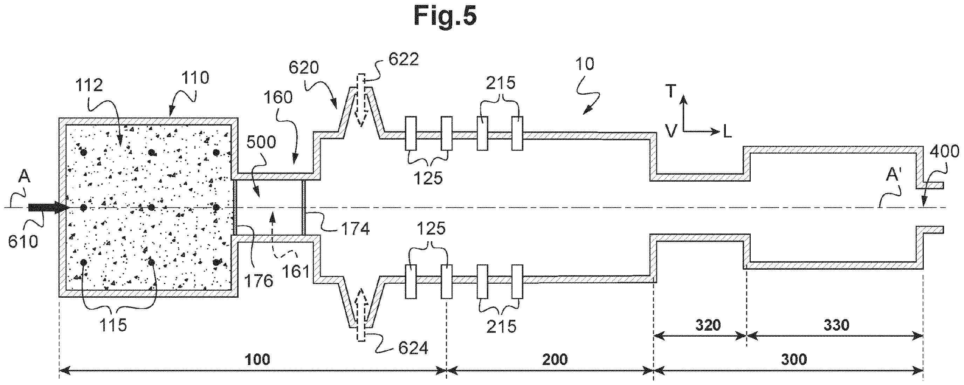

- la figure 5 est une vue en coupe analogue à la figure 2 qui représente le four selon le premier mode de réalisation dans un premier mode de fonctionnement à fusion électrique et qui illustre en outre la zone de fusion électrique recouverte d'une couche de mélange vitrifiable retenue en aval par des moyens de blocage et dont la fusion pour obtenir le verre fondu est réalisée uniquement dans ladite zone avec l'électricité pour énergie ;

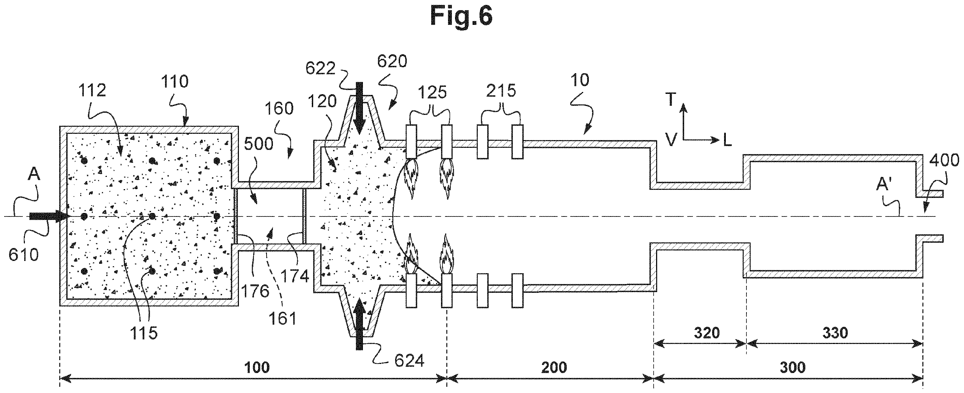

- la figure 6 est une vue en coupe analogue à la figure 2 qui représente le four selon le premier mode de réalisation dans un deuxième mode de fonctionnement hybride dans lequel la fusion du mélange vitrifiable est réalisée conjointement dans la zone de fusion électrique et dans la zone de fusion à flammes chacune alimentée par des dispositifs d'enfournement distincts et qui illustre la zone de fusion électrique recouverte d'une couche de mélange vitrifiable introduite par un premier dispositif d'enfournement et la zone de fusion à flammes recouverte par une couche de mélange vitrifiable introduite par un deuxième dispositif d'enfournement comportant deux enfourneuses ;

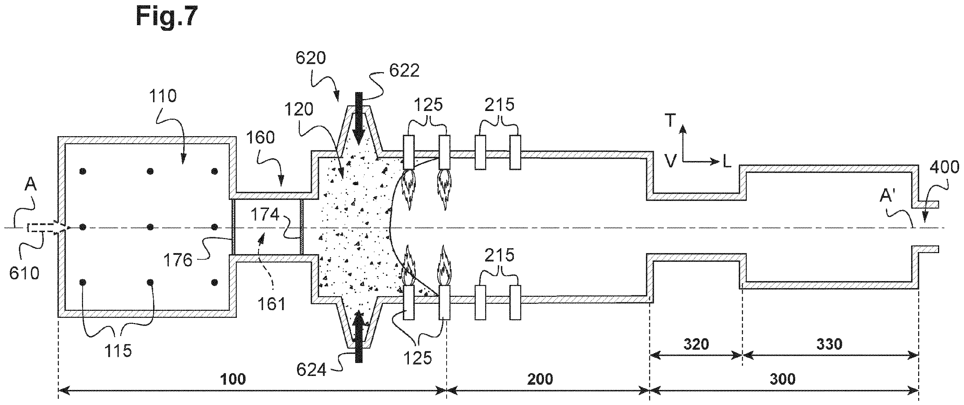

- la figure 7 est une vue en coupe analogue à la figure 2 qui représente le four selon le premier mode de réalisation dans un troisième mode de fonctionnement à fusion par flammes et qui illustre en outre la zone de fusion à flammes recouverte d'une couche de mélange vitrifiable et dont la fusion pour obtenir le verre fondu est réalisée par combustion dans ladite zone pourvue de brûleurs avec un combustible pour énergie ;

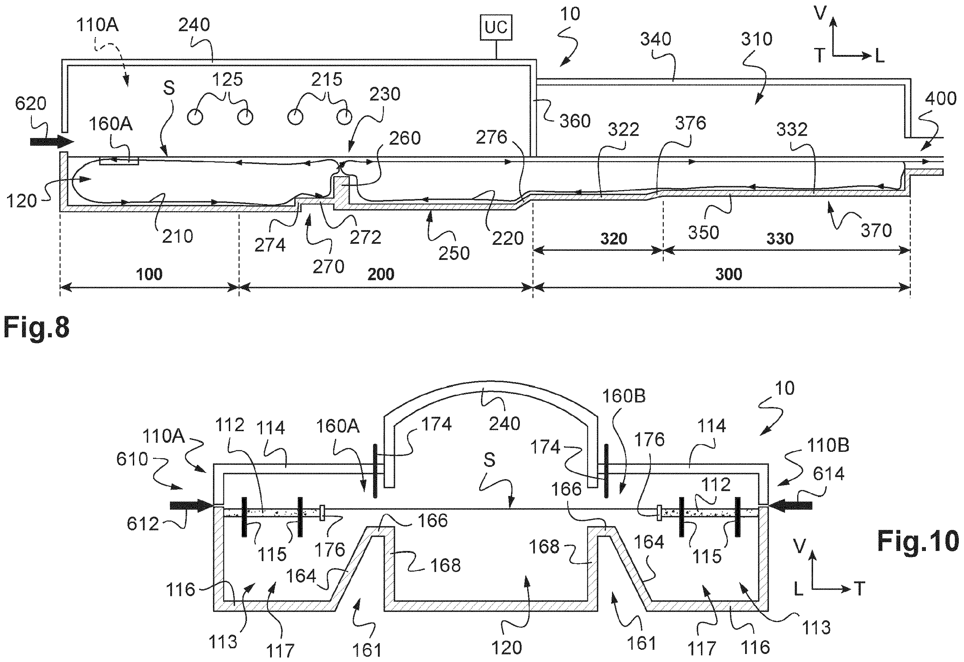

- la figure 8 est une vue en coupe par un plan vertical selon l'axe longitudinal A-A' du four qui représente un four hybride pour la fabrication de verre selon un deuxième mode de réalisation de l'invention comportant deux zones de fusion électrique et une zone de fusion à flammes et qui illustre ladite zone de fusion à flammes à laquelle sont respectivement reliées une première zone de fusion électrique et une deuxième zone de fusion électrique agencées transversalement, ladite zone de fusion à flammes étant reliée à une zone d'affinage qui, comportant une première courroie de convection et une deuxième courroie de convection, est elle-même reliée à une zone de refroidissement parcourue par ladite deuxième courroie de convection ;

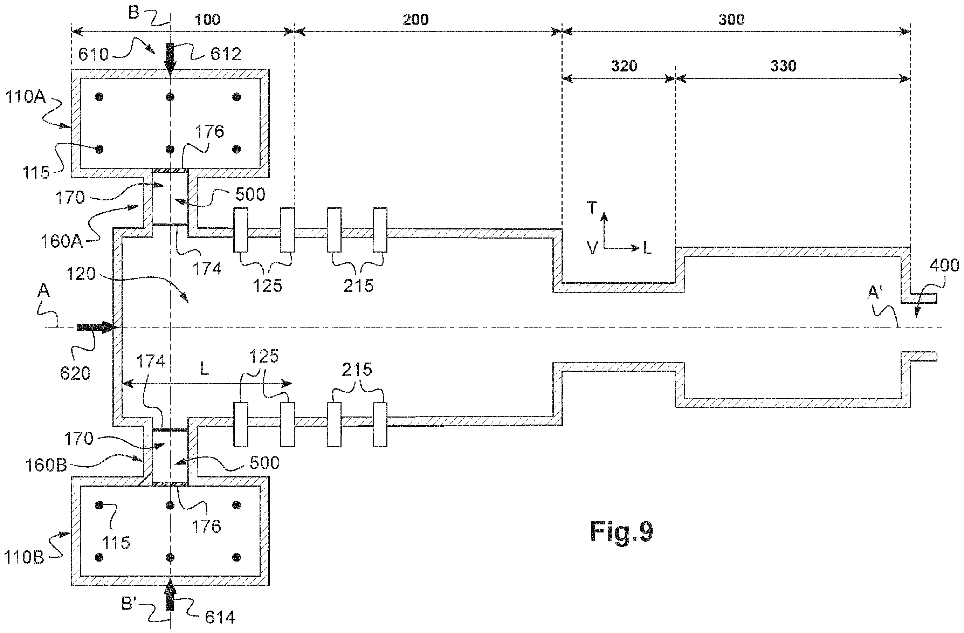

- la figure 9 est une vue en coupe par un plan horizontal qui représente le four hybride selon le deuxième mode de réalisation vu de dessus et qui illustre en outre la première zone de fusion électrique et la deuxième zone de fusion électrique agencées transversalement de part et d'autre de la zone de fusion à flammes à laquelle chacune desdites zones est reliée par un corset ;

- la figure 10 est une vue en coupe par un plan vertical selon un axe transversal B-B' montré sur la figure 9 qui représente le four hybride selon le deuxième mode de réalisation et qui illustre la première zone de fusion électrique et la deuxième zone de fusion électrique respectivement reliées transversalement à ladite zone de fusion à flammes par un premier corset et par un deuxième corset comportant chacun un dispositif de séparation « anti-retour » du verre, ici analogue à celui de la figure 3 ;

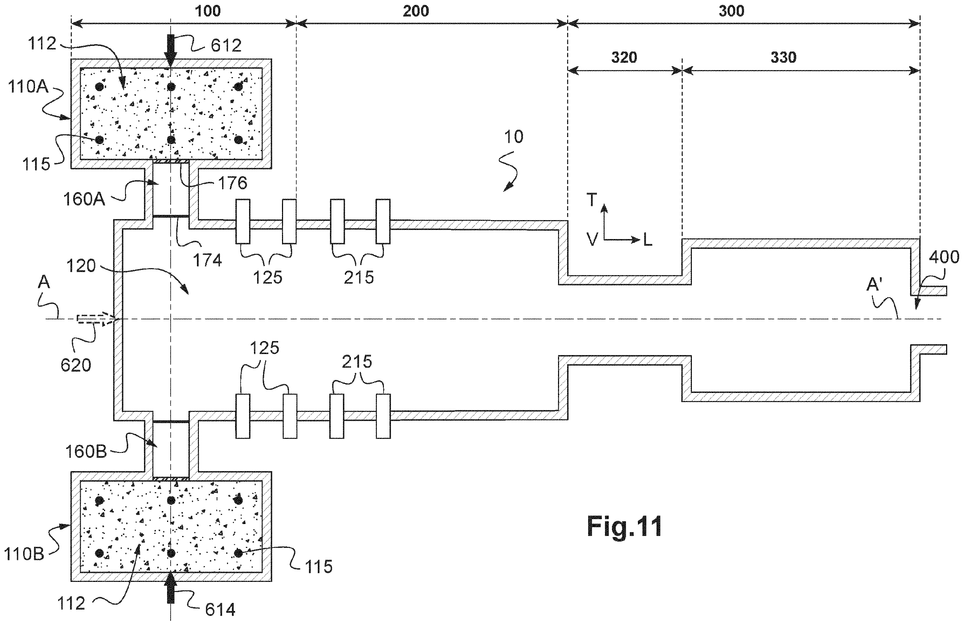

- la figure 11 est une vue en coupe analogue à la figure 9 qui représente le four selon le deuxième mode de réalisation dans un premier mode de fonctionnement à fusion électrique et qui illustre en outre la première zone de fusion électrique et la deuxième zone de fusion électrique respectivement recouverte d'une couche de mélange vitrifiable retenue par des moyens de blocage et dont la fusion pour obtenir le verre fondu est réalisée uniquement dans ladite zone avec l'électricité pour énergie, sans recourir à la zone de fusion à flammes ;

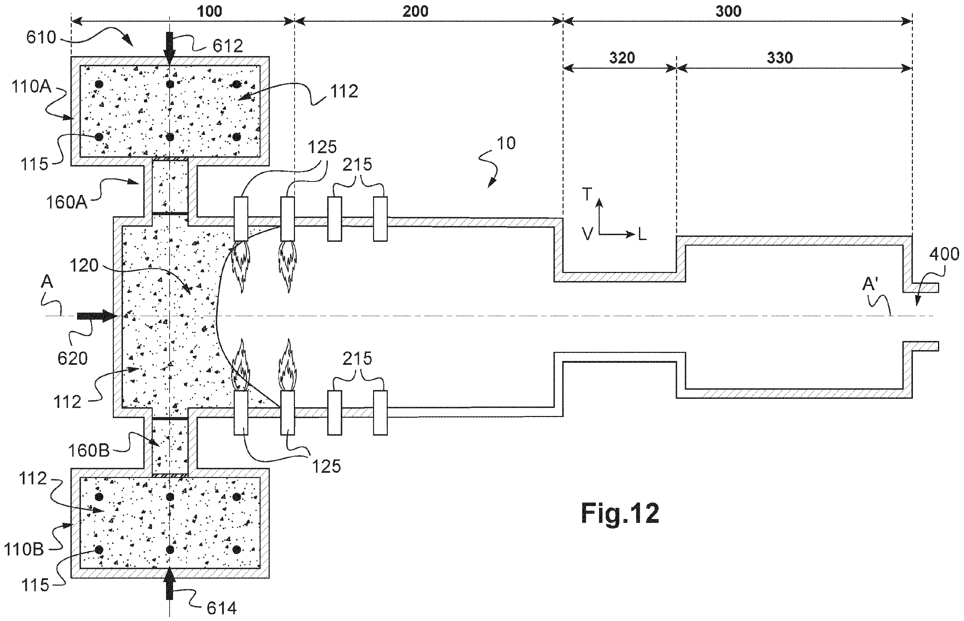

- la figure 12 est une vue en coupe analogue à la figure 9 qui représente le four selon le deuxième mode de réalisation dans un deuxième mode de fonctionnement hybride dans lequel la fusion du mélange vitrifiable est réalisée conjointement dans les première et deuxième zones de fusion électrique et dans la zone de fusion à flammes et qui illustre les deux zones de fusion électrique recouvertes d'une couche de mélange vitrifiable respectivement introduit par une première enfourneuse et par une deuxième enfourneuse d'un premier dispositif d'enfournement, et la zone de fusion à flammes dans laquelle du mélange vitrifiable est introduit par un deuxième dispositif d'enfournement lequel est distinct dudit premier dispositif d'enfournement.

### DESCRIPTION DETAILLEE DES FIGURES

Dans la suite de la description, on adoptera à titre non limitatif les orientations longitudinale, verticale et transversale en référence au trièdre (L, V, T) représenté sur les figures.

On utilisera également par convention les termes « amont » et « aval » en référence à l'orientation longitudinale, ainsi que « supérieur » et « inférieur » ou « haut » et « bas » en référence à l'orientation verticale, et enfin « gauche » et « droite » en référence à l'orientation transversale.

Dans la présente description, les termes « amont » et « aval » correspondent au sens d'écoulement principal du verre dans le four, le verre s'écoulant de l'amont vers l'aval suivant un axe longitudinal A-A' du four hybride (amont en A, aval en A') tel que représenté notamment sur les figures 2 et 9.

Par ailleurs, les termes « courroie » et « boucle » sont ici synonymes, ces termes en lien avec la recirculation du verre dans le four étant bien connus de l'Homme du métier, tout comme le sont respectivement les notions de « voûte froide » et de « voûte chaude » pour un four destiné à la fabrication du verre.

Les figures illustrant le four hybride selon l'invention ne sont pas à l'échelle.

On a représenté sur les figures 1 et 2 des vues en coupe illustrant, respectivement de côté et de dessus, un four hybride 10 pour la fabrication de verre selon un premier mode de réalisation de l'invention.

Par analogie avec la troisième conception de four décrite précédemment, le terme « hybride » est ici employé pour qualifier le four selon l'invention en raison notamment de l'utilisation possible de deux sources d'énergie différentes, en particulier lorsque le mode de fonctionnement du four est le mode dit hybride dans lequel la fusion du mélange vitrifiable est obtenue en utilisant conjointement de l'énergie électrique et de l'énergie combustible.

Toutefois, l'analogie avec la présente invention ne va pas au-delà dès lors que l'énergie électrique (constituant une première source d'énergie) et l'énergie combustible (constituant une deuxième source d'énergie) sont susceptibles d'être exclusivement utilisées l'une ou l'autre pour obtenir la fusion, en particulier dans les autres modes de fonctionnement du four, de sorte que - en cas d'utilisation - l'énergie électrique ne constitue jamais un appoint dans un four hybride 10 selon l'invention.

Le four hybride 10 selon l'invention est tout particulièrement destiné à alimenter une unité de flottage du verre sur un bain de métal fondu, généralement de l'étain, pour la fabrication de verre plat.

Tel qu'illustré par les figures 1 et 2, le four hybride 10 selon le premier mode de réalisation comporte successivement d'amont en aval, suivant ledit axe longitudinal A-A' du four, une zone 100 de fusion, une zone 200 d'affinage et d'homogénéisation (ci-après dite zone d'affinage 200) et une zone 300 de refroidissement du verre.

De préférence, le four hybride 10 présente une symétrie de conception par rapport audit axe longitudinal A-A'.

Dans un four hybride 10 selon l'invention, ladite zone 100 de fusion comporte au moins une zone 110 de fusion utilisant une première énergie, par exemple de l'énergie électrique, et une zone 120 de fusion utilisant une deuxième énergie, par exemple une énergie combustible, autrement dit une deuxième énergie différente de ladite première énergie.

Dans la suite de la description et de manière non limitative, ladite au moins une zone 110 de fusion correspond à une zone de fusion dite «électrique» tandis que ladite zone 120 de fusion correspond à une zone de fusion dite « à flammes » en raison de l'utilisation d'au moins un combustible.

Dans un four hybride 10 selon l'invention, ladite au moins une zone 110 de fusion électrique et la zone 120 de fusion à flammes formant ensemble ladite zone 100 de fusion du four sont structurellement distinctes, c'est-à-dire constituent des zones de fusion séparées, et sont fonctionnellement indépendantes l'une de l'autre.

Ladite au moins une zone 110 de fusion électrique est apte à délivrer une tirée maximale qui est inférieure ou égale à la tirée nominale du four, c'est-à-dire comprise entre 0% et 100% de la tirée nominale, préférentiellement jusqu'à 100% afin de pouvoir obtenir ladite tirée nominale uniquement par une fusion électrique.

La zone 120 de fusion à flammes est apte à délivrer une tirée maximale qui est inférieure ou égale à la tirée nominale du four, c'est-à-dire comprise entre 0 et 100% de la tirée nominale, préférentiellement jusqu'à 100% afin de pouvoir obtenir ladite tirée nominale uniquement par une fusion à flammes, voire est comprise entre 0 et 50% de la tirée nominale.

Lorsque la zone 120 de fusion à flammes est apte à délivrer une tirée maximale qui est comprise entre 0 et 50% de la tirée nominale, ladite tirée nominale n'est susceptible d'être obtenue qu'en utilisant conjointement la fusion à flammes et la fusion électrique ou alors uniquement ladite au moins une zone 110 de fusion électrique si ladite au moins une zone 110 de fusion électrique est apte à délivrer une tirée maximale correspondant à 100% de la tirée nominale.

De préférence et par comparaison à ladite au moins une zone 110 de fusion électrique, le four hybride 10 selon l'invention comporte une seule zone 120 de fusion à flammes.

Selon l'invention, ladite au moins une zone 110 de fusion électrique et ladite zone 120 de fusion à flammes sont configurées pour pouvoir fonctionner indépendamment l'une de l'autre de manière à permettre une utilisation sélective de l'une et/ou l'autre desdites zones de fusion 110 et 120 et ce faisant conférer une flexibilité énergétique audit four hybride 10.

Grâce à cette conception, le four hybride 10 est apte à fonctionner selon plusieurs modes de fonctionnement qui sont notamment déterminés selon l'utilisation faite d'une seule énergie ou de deux énergies simultanément, c'est-à-dire de l'électricité et/ou d'un combustible, pour la fusion du mélange vitrifiable.

On décrira plus en détails ultérieurement lesdits modes de fonctionnement du four hybride 10 en référence aux figures 5 à 7.

Le four hybride 10 selon l'invention est en effet apte à fonctionner dans un mode de fonctionnement qui est susceptible d'être choisi sélectivement parmi :
- un premier mode de fonctionnement à fusion électrique dans lequel le verre fondu est uniquement produit par ladite au moins une zone 110 de fusion électrique ;
- un deuxième mode de fonctionnement hybride dans lequel le verre fondu est produit conjointement par ladite au moins une zone 110 de fusion électrique et par ladite zone 120 de fusion à flammes ;
- un troisième mode de fonctionnement à fusion par flammes dans lequel le verre fondu est uniquement produit par ladite au moins une zone 120 de fusion à flammes.

Avantageusement, le four hybride 10 se caractérise en outre par ce fonctionnement de type multimode, permettant selon le mode de fonctionnement sélectionné de choisir en particulier la ou les énergies qui seront utilisées pour fondre le mélange vitrifiable, conférant au four hybride 10 selon l'invention une flexibilité énergétique.

On décrira tout d'abord la zone 100 de fusion et ensuite la zone 200 d'affinage et la zone 300 de refroidissement du verre d'un four hybride 10 selon le premier mode de réalisation.

Le four hybride 10 comporte, d'une part, au moins une zone 110 de fusion électrique qui est apte à être alimentée en mélange vitrifiable par au moins un premier dispositif 610 d'enfournement et, d'autre part, la zone 120 de fusion à flammes qui est apte à être alimentée en mélange vitrifiable par au moins un deuxième dispositif 620 d'enfournement.

Le deuxième dispositif 620 d'enfournement associé à la zone 120 de fusion à flammes est distinct et indépendant en fonctionnement du premier dispositif 610 d'enfournement associé à ladite au moins une zone 110 de fusion électrique de sorte qu'il est possible d'utiliser sélectivement l'un et/ou l'autre, en fonction du mode de fonctionnement du four choisi.

Dans le premier mode de réalisation de l'invention qui est représenté sur les figures 1 à 7, le four hybride 10 comporte une seule zone 110 de fusion électrique, dite à voûte froide, et ladite zone 120 de fusion à flammes, dite à voûte chaude.

De préférence, le four hybride 10 comporte un premier dispositif 610 d'enfournement constitué d'une unique enfourneuse pour alimenter en mélange vitrifiable la zone 110 de fusion électrique, ledit premier dispositif 610 d'enfournement étant représenté schématiquement par une flèche sur la figure 2.

De préférence, l'enfourneuse formant ledit premier dispositif 610 d'enfournement est agencée longitudinalement, en amont de la zone 110 de fusion électrique tel qu'illustré sur la figure 2.

En variante, ledit premier dispositif 610 d'enfournement comporte plus d'une enfourneuse, par exemple deux enfourneuses, pour alimenter ladite zone 110 de fusion électrique qui est du type à voûte froide.

En variante, le premier dispositif 610 d'enfournement n'est pas agencé longitudinalement mais transversalement par rapport à l'axe (A-A') du four, notamment lorsque le premier dispositif 610 d'enfournement comporte plus d'une enfourneuse.

Avantageusement, le premier dispositif 610 d'enfournement est configuré pour répandre le mélange vitrifiable en une couche recouvrant l'ensemble de la surface du verre fondu dans la zone 110 de fusion électrique, de préférence de manière sensiblement uniforme.

A titre d'exemple, on pourra se reporter aux enseignements du document FR2599734 qui décrit un dispositif d'enfournement ou enfourneuse apte à répandre le mélange vitrifiable en une telle couche recouvrant la surface d'un bain de verre fondu.

De préférence, le deuxième dispositif 620 d'enfournement pour alimenter en mélange vitrifiable ladite zone 120 de fusion à flammes comporte une première enfourneuse 622 et une deuxième enfourneuse 624 qui sont agencées transversalement de part et d'autre de ladite zone 120 de fusion à flammes, de préférence orthogonalement à l'axe longitudinal (A-A') du four.

En variante, le deuxième dispositif 620 d'enfournement ne comporte qu'une seule enfourneuse pour alimenter ladite zone 120 de fusion à flammes en mélange vitrifiable.

La première enfourneuse 622 et la deuxième enfourneuse 624 ont chacune été représentées schématiquement par une flèche sur la figure 2.

On connaît de l'état de la technique de nombreux exemples de réalisation d'enfourneuse, notamment mais non exclusivement à vis sans fin, qui sont aptes à alimenter en mélange vitrifiable une telle zone 120 de fusion à flammes d'un four hybride 10 selon l'invention.

Le mélange vitrifiable (aussi appelé parfois « composition ») est généralement constitué des matières premières et du calcin (ou « groisil ») dont la fusion permet d'obtenir du verre fondu.

De manière connue, le calcin (en anglais « cullet ») est constitué de débris de verre qui, obtenus par recyclage du verre, sont broyés et généralement nettoyés avant d'être ensuite ajoutés aux matières premières pour fabriquer à nouveau du verre.

Avantageusement, le calcin favorise la fusion, c'est-à-dire la transformation par fusion du mélange vitrifiable en verre. L'utilisation de calcin permet en outre d'économiser du sable et donc d'utiliser moins d'énergie car le calcin a un point de fusion inférieur au sable, ce qui participe à la réduction de l'empreinte carbone du processus d'élaboration.

De surcroît, le calcin permet de valoriser le verre usagé en le recyclant (le verre étant recyclable à l'infini), les quantités de matières premières nécessaires à la fabrication du verre s'en trouvant dès lors réduites à proportion, ce qui participe là encore à la réduction de l'empreinte carbone du processus d'élaboration.

Avantageusement, le mélange vitrifiable comporte 10 à 40% de calcin, préférentiellement 30 à 70%, voire 100% de calcin.

De préférence, le mélange vitrifiable introduit dans le four par le premier dispositif 610 d'enfournement associé à ladite au moins une zone 110 de fusion électrique et le mélange vitrifiable introduit dans le four par le deuxième dispositif 620 d'enfournement associé à ladite zone 120 de fusion à flammes présentent une composition similaire. Tel est en outre le cas lorsque la zone 110 de fusion électrique et la zone 120 de fusion à flammes sont utilisées conjointement dans le deuxième mode de fonctionnement dit hybride.

Par composition « similaire » de mélange vitrifiable, on entend une composition chimique sensiblement identique qui correspond à celle du verre à fabriquer.

Toutefois, le mélange vitrifiable respectivement introduit dans la zone 110 de fusion électrique et la zone 120 de fusion à flammes n'est pas nécessairement identique, en particulier il est possible d'avoir une variation de la quantité de calcin dans chacun des mélanges vitrifiables, voire une adjonction sélective d'agent(s) affinant(s) dans l'une et non dans l'autre.

Avantageusement, ladite au moins une zone 110 de fusion électrique et ladite zone 120 de fusion à flammes sont agencées en série de manière que le verre fondu produit par l'une desdites zones de fusion située en amont soit susceptible de s'écouler dans l'autre desdites zones de fusion située en aval.

Grâce à un tel agencement, le verre fondu produit par l'une desdites zones de fusion se mélange avec le verre fondu produit par l'autre desdites zones de fusion lorsque lesdites zones de fusion électrique et à flammes sont utilisées conjointement, comme dans le deuxième mode de fonctionnement hybride du four.

Dans ce premier mode de réalisation, le four hybride 10 comporte par exemple longitudinalement une zone 111 d'enfournement dans laquelle est agencé le premier dispositif 610 d'enfournement (encore appelé enfourneuse) qui est destiné à introduire le mélange vitrifiable dans la zone 110 de fusion électrique, ledit dispositif 610 d'enfournement étant représenté schématiquement par une flèche sur les figures 1 et 2.

Avantageusement, le dispositif 610 d'enfournement est configuré pour déposer le mélange vitrifiable de manière à former une couche 112 sur l'ensemble de la surface d'un bain 113 de verre tel qu'illustré notamment par les figures 5 et 6 sur lesquelles la couche 112 de mélange vitrifiable a été matérialisée.

La couche 112 de mélange vitrifiable forme une couche isolante entre le bain 113 de verre et une voûte 114 de la zone 110 de fusion électrique, raison pour laquelle une telle zone 110 de fusion électrique est dite à « voûte froide ».

De préférence, le bain 113 de verre est uniformément recouvert d'une telle couche 112 constituée de mélange vitrifiable, par exemple de 10 à 40 cm d'épaisseur, et en dessous de laquelle ont lieu les réactions chimiques complexes qui, décrites en préambule de la présente demande, conduisent à l'obtention du verre fondu.

La zone 110 de fusion électrique comporte des électrodes 115 configurées pour fondre le mélange vitrifiable introduit par le premier dispositif 610 d'enfournement afin d'obtenir du verre fondu, notamment ledit bain 113 de verre fondu illustré par la figure 1.

Dans la zone 110 de fusion électrique, la puissance dissipée autour des électrodes 115 engendre une zone de fortes convections comportant en particulier des courants ascendants très intenses qui apportent les calories nécessaires à la frontière entre la fonte et le mélange vitrifiable formant ladite couche 112.

De plus, bien que perméable au dioxyde de carbone (CO₂), la couche 112de mélange vitrifiable présente sur la surface du bain 113 permet avantageusement de piéger par condensation ou par réactions chimiques les vapeurs, parfois toxiques selon la composition, émises par le verre fondu.

Avantageusement, les électrodes 115 sont agencées en surface de manière à plonger dans le bain 113 de verre, à travers la couche 112 recouvrant la surface du bain 113 tel qu'illustré par la figure 1.

De préférence, les électrodes 115 plongeantes s'étendent verticalement. En variante, les électrodes 115 plongeantes s'étendent obliquement, c'est-à-dire sont inclinées de manière à présenter un angle donné par rapport à l'orientation verticale.

En variante, les électrodes 115 sont agencées à travers une sole 116 de la zone 110 de fusion électrique de manière à être totalement immergées dans le bain 113, les électrodes montantes (par opposition aux électrodes plongeantes) s'étendant de préférence verticalement, en variante obliquement.

Par comparaison à des électrodes agencées à travers la sole, les électrodes 115 plongeantes permettent en outre un contrôle plus aisé de leur état d'usure et entraîne une dissipation de l'énergie électrique qui est avantageusement plus proche de l'interface de fusion, de la couche 112 de mélange vitrifiable.

De plus, les électrodes 115 plongeantes permettent par comparaison avec des électrodes montantes de conserver une sole 116 de la zone 110 de fusion électrique qui est exempte de toutes ouvertures.

De préférence et tel qu'illustré par la figure 1, la sole 116 de la zone 110 de fusion électrique est plane. En variante, la sole 116 comporte au moins une variation de profondeur relativement à la surface du bain 113 de verre, ladite variation comportant au moins une élévation et/ou au moins une dénivellation.

De préférence, les électrodes 115 de fusion sont réparties de manière régulière dans le bain 113. Par ailleurs, le nombre de neuf électrodes 115 représentées ici sur les figures 1 et 2 n'est qu'un exemple illustratif et n'est donc nullement limitatif.

En variante, la zone 110 de fusion électrique pourrait comporter cumulativement des électrodes plongeantes et des électrodes montantes.

Selon une autre variante d'agencement, au moins une partie des électrodes 115 traversent au moins une paroi latérale délimitant ladite zone 110 de fusion électrique, lesdites électrodes 115 s'étendant alors horizontalement et/ou obliquement.

Avantageusement, les électrodes 115 sont en molybdène, ce métal réfractaire supportant des températures de 1700°C étant particulièrement apte à permettre de réaliser une telle fusion du verre en utilisant l'effet Joule, le verre ne devenant conducteur qu'à haute température.

Avantageusement, la zone 110 de fusion électrique comporte une zone de faible convection, dite zone tampon 117, qui est située entre l'extrémité libre des électrodes 115 plongeantes et la sole 116.

La zone 110 de fusion électrique du four hybride 10 est configurée pour présenter, en dessous desdites électrodes 115 plongeantes, une profondeur déterminée de manière à obtenir une telle zone tampon 117 de faible convection.

De préférence, la profondeur entre l'extrémité libre des électrodes 115 plongeantes et la sole 116 est supérieure à 600 mm, préférentiellement supérieure à 800 mm.

Une telle zone tampon 117 de faible convection constitue une autre raison de préférer les électrodes 115 plongeantes par rapport à des électrodes montantes traversant la sole 116.

Avantageusement, la présence d'une zone tampon 117 de faible convection participe directement à l'obtention d'un verre de haute qualité en favorisant un temps de séjour du verre plus long dans la zone 110 de fusion électrique.

Tel qu'illustré par les figures 1 et 2, la zone 110 de fusion électrique est située en amont de la zone de fusion 120 à flammes, le verre s'écoulant dans le four hybride 10 de l'amont vers l'aval, soit suivant l'axe longitudinal A-A' du four.

Avantageusement, la zone 110 de fusion électrique et la zone 120 de fusion à flammes située en aval sont reliées l'une à l'autre par un corset 160, c'est-à-dire une zone de largeur réduite, tel qu'illustré par la figure 2.

Le verre fondu produit par ladite zone 110 de fusion électrique se mélange donc avantageusement avec le verre fondu produit par la zone de fusion 120 à flammes lorsque lesdites zones de fusion électrique et à flammes sont utilisées conjointement comme dans le deuxième mode de fonctionnement hybride du four.

Lorsque la zone de fusion 120 à flammes n'est à contrario pas utilisée, comme dans le premier mode de fonctionnement à fusion électrique, le verre fondu produit par la zone 110 de fusion électrique s'écoule alors à travers la zone de fusion 120 à flammes, jusqu'à la zone 200 d'affinage située plus en aval.

Avantageusement, un tel corset 160 permet d'assurer un refroidissement du verre fondu lorsque le verre s'écoule de la zone 110 de fusion électrique vers la zone 120 de fusion à flammes, ledit refroidissement du verre étant d'autant plus important que le corset 160 présente une grande longueur.

La figure 2 illustre de manière non limitative un exemple de réalisation du corset 160 reliant la zone 110 de fusion électrique à la zone 120 de fusion à flammes.

Selon cet exemple de réalisation, le passage de la zone 110 de fusion électrique au corset 160 se fait par un rétrécissement brusque de la largeur et de la section de passage du verre, par exemple ici par des parois formant un angle de 90° avec l'axe longitudinal A-A' du four, et le passage du corset 160 à la zone 120 de fusion à flammes se fait inversement par un élargissement brusque de la section de passage du verre, par exemple ici également par des parois formant un angle de 90° avec l'axe longitudinal A-A' du four.

En variante, l'angle en entrée du corset 160 pourrait présenter une valeur qui soit supérieure à 90° de sorte que le rétrécissement de la largeur soit moins brusque, plus progressif, de manière analogue la valeur de l'angle en sortie du corset 160 pourrait être choisie pour que l'élargissement soit également moins brusque, plus progressif suivant l'axe longitudinal A-A' du four.

Avantageusement, le verre fondu s'écoulant de l'amont vers l'aval par le corset 160 est prélevé dans la partie inférieure de la zone 110 de fusion électrique, soit dans le fond, le verre y étant par comparaison plus « froid » que dans la zone située entre les électrodes 115 qui présente de fortes convections.

Le corset 160 comporte une sole 165 qui est reliée à la sole 116 de la zone 100 de fusion électrique du four hybride 10.

Avantageusement, le four hybride 10 comporte un dispositif 170 de séparation dit « anti-retour » du verre qui est configuré pour empêcher un retour du verre fondu de la zone 120 de fusion à flammes vers la zone 110 de fusion électrique.

Le dispositif 170 de séparation est positionné au niveau du corset 160, c'est-à-dire entre la zone 100 de fusion électrique et la zone 120 de fusion à flammes pour assurer la fonction anti-retour du verre.

Avantageusement, le dispositif 170 de séparation est apte à empêcher un retour du verre vers la zone 110 de fusion électrique et cela que la zone 110 de fusion électrique soit utilisée ou non, ce qui est fonction du mode de fonctionnement du four hybride 10.

On décrira ci-après plusieurs exemples de réalisation d'un tel dispositif 170 de séparation « anti-retour » du verre.

Selon un premier exemple de réalisation illustré par la figure 3 qui représente en détail le corset 160 du four hybride 10 selon le premier mode de réalisation des figures 1 et 2, le dispositif 170 de séparation « anti-retour » du verre est formé par au moins une élévation 161 de la sole 165 dudit corset 160.

De préférence, l'élévation 161 comporte, successivement de l'amont vers l'aval, au moins un premier tronçon 164 ascendant, un deuxième tronçon 166 sommital et un troisième tronçon 168 descendant.

Avantageusement, l'élévation 161 s'étend transversalement sur toute la largeur du corset 160.

Bien entendu, une telle élévation 161 peut présenter de nombreuses variantes géométriques quant à sa forme générale, ses dimensions, notamment selon la configuration de chacun des différents tronçons 164, 166 et 168 la constituant.

De préférence, le tronçon 164 ascendant est incliné d'un angle (a) déterminé de manière à former une rampe apte à provoquer une remontée du verre fondu vers le tronçon 166 sommital de l'élévation 161 tel qu'illustré par la figure 3.

De préférence, le tronçon 164 ascendant est un plan incliné, présentant par exemple un angle (a) aigu compris entre 20° et 70°, ledit angle (a) étant noté comme l'angle compris entre le tronçon 164 ascendant de l'élévation 161 et l'horizontale en prenant ici comme référence la sole 116 plane de la zone 110 de fusion électrique.

En variante (non représentée), le tronçon 164 ascendant est étagé par exemple réalisé en escalier avec au moins une marche, voire deux marches ou plus dont les dimensions en hauteur et/ou longueur peuvent être ou non identiques.

De préférence, le tronçon 166 sommital est plan, formant un plateau horizontal.

Avantageusement, le tronçon 166 sommital s'étend ainsi longitudinalement sur une longueur donnée, de préférence ici supérieure ou égale à la moitié de la longueur totale du corset 160.

Le tronçon 166 sommital détermine une hauteur H1 maximale que présente l'élévation 161 et ce faisant détermine la section du passage du verre fondu dans le corset 160.

Le tronçon 168 descendant de l'élévation 161 s'étend verticalement, relié par un angle droit à l'extrémité aval du tronçon 166 sommital qui, plan, s'étend horizontalement.

En variante et tel qu'illustré par la figure 4 qui sera décrite ci-après dans un deuxième exemple de réalisation du dispositif 170 de séparation anti-retour, le tronçon 168 descendant est configuré pour accompagner progressivement l'écoulement du verre fondu du corset 160 vers la zone 120 de fusion à flammes.

Un tel tronçon 168 est par exemple formé par un plan incliné, lequel peut être étagé ou non, notamment réalisé en escalier à l'instar de la description donnée précédemment pour les variantes de réalisation du tronçon 164 ascendant.

Avantageusement, le four hybride 10 comporte au moins un moyen 174 de séparation atmosphérique qui est apte à séparer l'atmosphère de la zone 110 de fusion électrique, dite à voûte froide, et l'atmosphère de la zone 120 de fusion à flammes, dite à voûte chaude.

Tel qu'illustré par la figure 3, le moyen 174 de séparation atmosphérique est par exemple formé par une cloison qui, agencée au niveau du corset 160, s'étend verticalement depuis la voûte et dont l'extrémité libre inférieure est de préférence en contact avec la surface du verre, voire immergée dans le verre.

Avantageusement, le four hybride 10 comporte des moyens 176 de blocage qui, encore appelés « écrémeur », sont aptes à retenir la couche 112 de mélange vitrifiable dans la zone 110 de fusion électrique de sorte que ledit mélange vitrifiable présent en surface du bain 113 de verre ne pénètre pas dans le corset 160.

De préférence, les moyens 176 de blocage de la couche 112 sont structurellement distincts du moyen 174 de séparation, lesdits moyens 176 de blocage pouvant être adjacents ou distants desdits moyens 174 de séparation comme illustré par la figure 3.

En variante, le moyen 174 de séparation est non seulement apte à assurer la fonction de séparation atmosphérique entre voûte froide et voûte chaude mais également apte à assurer la fonction des moyens 176 de blocage.

Avantageusement, le moyen 174 de séparation est alors configuré pour être immergé à son extrémité libre dans le bain 113 de verre afin de retenir ladite couche 112 de mélange vitrifiable dans la zone 110 de fusion électrique. De préférence, ledit moyen 174 de séparation est positionné à l'extrémité amont du corset 160 afin que ladite couche 112 de mélange vitrifiable présent en surface du bain 113 de verre ne pénètre pas dans le corset 160 situé en aval.

Selon un deuxième exemple de réalisation illustré par la figure 4 et décrit ci-après par comparaison avec le premier exemple de la figure 3, le dispositif 170 de séparation anti-retour du verre comporte de manière analogue au moins une élévation 161 de la sole 165 du corset 160 et un barrage 172.

Avantageusement, l'élévation 161 de la sole 165 du corset 160 est de forme sensiblement identique à celle décrite précédemment en référence à la figure 3, à savoir constituée successivement d'un tronçon 164 ascendant, d'un tronçon 166 sommital formant un plateau et d'un tronçon 168 descendant.

La figure 4 illustre toutefois la variante de réalisation décrite précédemment selon laquelle le tronçon 168 descendant de l'élévation 161 est configuré pour accompagner progressivement l'écoulement du verre fondu du corset 160 vers la zone 120 de fusion à flammes. Selon cette variante, le tronçon 168 est par exemple formé par un plan incliné, lequel peut être étagé ou non.

Avantageusement, le barrage 172 est agencé au-dessus du tronçon 166 sommital de l'élévation 161 de la sole 165.

Sur la figure 4, l'élévation 161 de la sole 165 présente une hauteur H2, notée comme précédemment par rapport à l'horizontale au niveau de la sole 116 plane de la zone 110 de fusion électrique prise comme référence, ladite hauteur H2 étant comparativement inférieure à la hauteur H1 notée sur la figure 3.

Ainsi, la profondeur P2 de verre entre la surface S de verre fondu et le tronçon 166 sommital de l'élévation 161 de la sole 165 est supérieure à la profondeur P1 dans l'exemple de réalisation illustré par la figure 3.

De préférence, le barrage 172 associé à l'élévation 161 est monté mobile verticalement pour permettre d'en régler la profondeur d'immersion dans le bain 113 de verre de manière à pouvoir faire varier la section du passage du verre entre l'extrémité libre du barrage 172 et la partie sommitale 166 de l'élévation 161.

En variante, le barrage 172 est fixe de sorte que la section du passage du verre est alors constante, c'est-à-dire déterminée par la profondeur d'immersion dudit barrage 172 dans le bain 113 de verre.

De préférence, le barrage 172 est amovible, c'est-à-dire démontable, de sorte que ledit barrage 172 est susceptible d'être changé, voire réparé, notamment en raison de l'usure survenant au contact du verre, et ce grâce à quoi la maintenance du four hybride 10 s'en trouve facilitée.

Le barrage 172 est par exemple réalisé en métal ou alliage de métaux non réfractaire, ledit barrage étant alors apte à être refroidi par un circuit de refroidissement (non représenté) à fluide caloporteur, notamment un circuit du type « water jacket » selon les termes anglais usités.

Le barrage 172 participe alors au refroidissement du verre dans le corset 160 en limitant l'écoulement dans le corset 160 et grâce au circuit de refroidissement à fluide caloporteur du type « water jacket » qui permet d'évacuer une partie de la chaleur (des calories) transmise par le verre au barrage.

En variante, le barrage 172 est réalisé en matériau réfractaire, typiquement en céramique, par exemple un réfractaire électrofondu « AZS » (acronyme pour Alumine-Zircon-Silice) ou encore un métal réfractaire comme le molybdène.

Selon un troisième exemple de réalisation (non représenté), le dispositif 170 de séparation comporte uniquement un barrage qui, avantageusement identique au barrage 172 qui vient d'être décrit, est destiné à être en partie immergé dans le bain 113 de verre fondu.

De préférence et par comparaison avec l'agencement selon le deuxième exemple illustré par la figure 4, le barrage est alors positionné au niveau de l'extrémité amont du corset 160, à la jonction avec ladite zone 110 de fusion électrique.

De préférence, le barrage s'étend transversalement sur toute la largeur du corset 160 reliant la zone 110 de fusion électrique à la zone 120 de fusion à flammes.

Avantageusement et tel que décrit précédemment, le barrage est monté mobile verticalement pour permettre d'en régler la profondeur d'immersion dans le bain 113 de verre ou en variante occupe une position fixe déterminant une section donnée de passage du verre.

Avantageusement, le barrage agencé en amont du corset 160 est apte à assurer un blocage de la couche 112 de mélange vitrifiable recouvrant le bain 113 de verre dans la zone 110 de fusion électrique, assurant ainsi la fonction des moyens 176 de blocage décrite précédemment en référence à la figure 3 au bénéfice alors de la suppression de tels moyens 176 de blocage.

Tel que décrit précédemment à la figure 4, le barrage est avantageusement amovible, voire en fonction notamment du type de matériau utilisé pour sa construction est refroidi par un circuit de refroidissement à fluide caloporteur.

Avantageusement et selon les exemples de réalisation qui viennent d'être décrits, le dispositif 170 de séparation anti-retour du verre comporte un barrage 172 apte à être en partie immergé dans le verre fondu et/ou au moins une élévation 161 de la sole 165 du corset 160.

Avantageusement, le four hybride 10 comporte des moyens 500 de refroidissement du verre aptes à refroidir sélectivement le verre dans le corset 160.

Outre le refroidissement du verre lors de son écoulement à travers le corset 160 reliant la zone 110 de fusion électrique à la zone 120 de fusion à flammes située en aval, de tels moyens 500 de refroidissement permettent d'accroître encore le refroidissement du verre et surtout de faire varier ce refroidissement grâce à quoi une régulation de la température du verre est obtenue.

De préférence, les moyens 500 de refroidissement du verre dans le corset 160 comportent au moins un dispositif 510 de refroidissement par circulation d'air.

On décrira ci-après un exemple de réalisation de dispositif 510 de refroidissement tel que plus particulièrement représenté schématiquement sur les figures 3 et 4.

Un tel dispositif 510 de refroidissement par air du verre comporte par exemple au moins des moyens 512 d'admission pour introduire de l'air de refroidissement dans l'atmosphère dudit corset 160 du four hybride 10.

De préférence, le dispositif 510 de refroidissement du verre comporte des moyens 514 d'évacuation agencés dans le corset 160 pour évacuer l'air chaud et en assurer le renouvellement par de l'air frais de refroidissement.

En variante, les moyens d'évacuation sont formés par des moyens d'extraction (non représentés) qui, situés en aval du corset 160, sont destinés à extraire les fumées. Avantageusement, l'air chaud est alors évacué avec les fumées par lesdits moyens d'extraction sans que le four hybride 10 n'ait à être équipé de moyens supplémentaires.

Les moyens 512 d'admission et les moyens 514 d'évacuation d'air du dispositif 510 de refroidissement du verre sont par exemple formés par une ou des ouvertures débouchant dans les piédroits soutenant la voûte du corset 160.

Les moyens 512 d'admission et les moyens 514 d'évacuation d'air sont par exemple agencés transversalement de part et d'autre du corset 160, en variante sur l'un seulement des côtés du corset 160.

Les moyens 512 d'admission et les moyens 514 d'évacuation d'air du dispositif 510 de refroidissement du verre sont susceptibles d'être agencés en amont des moyens 174 de séparation atmosphérique tel qu'illustré sur la figure 3, voire en aval tel qu'illustré sur la figure 4.

Avantageusement, la température de l'air de refroidissement introduit dans le corset 160 est inférieure à la température de l'air chaud se trouvant à l'intérieur du corset 160, l'air de refroidissement mis en circulation formant un fluide caloporteur.

De préférence, l'air de refroidissement utilisé est de l'air atmosphérique prélevé à l'extérieur du four hybride 10, voire à l'extérieur de l'enceinte du bâtiment dans lequel est implanté ledit du four hybride 10.

Avantageusement, la température de l'air atmosphérique utilisé est contrôlée afin d'être régulée, l'air peut par exemple être préalablement refroidi ou réchauffé avant son introduction pour en contrôler la température, voire l'hygrométrie.

Le refroidissement du verre est principalement obtenu par convection, l'air de refroidissement introduit s'échauffant en venant notamment au contact de la surface du verre avant d'être évacué avec la chaleur (les calories) transmise par le verre.

Avantageusement, la circulation de l'air est apte à être contrôlée par l'intermédiaire de moyens de soufflage d'air (non représentés) tels que des ventilateurs qui, associés auxdits moyens d'admission et/ou d'évacuation, sont aptes à être commandés sélectivement pour faire varier le débit d'air en circulation.

Selon un autre exemple de réalisation, les moyens 500 de refroidissement du verre sont immergés dans le verre s'écoulant de l'amont vers l'aval à travers ledit corset 160 afin d'en permettre le refroidissement.

De tels moyens de refroidissement sont par exemple formés par des plots verticaux immergés dans le verre qui sont refroidis par un circuit de refroidissement à fluide caloporteur afin d'évacuer la chaleur transmise auxdits plots par le verre fondu.

Selon encore un autre exemple de réalisation, les moyens 500 de refroidissement comportent un dispositif de refroidissement du type échangeur de chaleur comportant en outre des moyens de refroidissement métalliques qui sont agencés dans l'atmosphère au du corset 160, c'est-à-dire au-dessus de la surface du verre, et qui sont traversés par un fluide caloporteur, typiquement de l'eau, afin de refroidir l'air et ce faisant le verre fondu.

Bien entendu, les moyens 500 de refroidissement associés au corset 160 tels que ceux selon les différents exemples qui viennent d'être décrits sont susceptibles d'être mis en œuvre seul ou encore en combinaison.

Avantageusement, les moyens 500 de refroidissement du verre associés au corset 160 permettent de contrôler sélectivement la température du verre laquelle température est susceptible de varier, en particulier lorsque la tirée varie, une augmentation de la tirée provoquant en effet une augmentation de la température du verre.

De préférence, les moyens 500 de refroidissement du verre associés au corset 160 sont utilisés lorsque l'est également la zone 110 de fusion électrique, par conséquent dans le premier mode de fonctionnement à fusion électrique ou le deuxième mode de fonctionnement hybride du four.

Tel que décrit précédemment, ladite zone 100 de fusion électrique est reliée par le corset 160 à la zone 120 de fusion à flammes du four hybride 10.

La zone 120 de fusion à flammes comporte au moins des brûleurs 125 dits « aériens » pour réaliser la fusion du mélange vitrifiable susceptible d'être introduit par le deuxième dispositif 620 d'enfournement, lesdits brûleurs 125 aériens étant agencés au-dessus de la surface S du verre fondu.

En variante non représentée, le four hybride 10 comporte des moyens de modulation (non représentés) tels que du « boosting » électrique et/ou des bouillonneurs qui sont agencés dans ladite zone 120 de fusion à flammes.

La zone 120 de fusion à flammes comporte par exemple quatre brûleurs aériens qui sont représentés schématiquement sur les figures 1 et 2.

Les brûleurs 125 aériens sont agencés transversalement, en conséquence sont souvent appelés « brûleurs transversaux », et sont par exemple disposés de part et d'autre de la zone 120 de fusion à flammes, ici représentés en vis-à-vis les uns des autres, en variante préférentiellement décalés les uns par rapport aux autres de manière à ne pas se faire face.

Le four hybride 10 comporte au moins un autre brûleur 215 disposé en aval des brûleurs 125 aériens et dont la fonction principale n'est pas la fusion du mélange vitrifiable mais la conduite du verre.

De préférence, le four hybride 10 comporte quatre brûleurs 215 aériens qui sont répartis transversalement de part et d'autre de la zone 200 d'affinage à l'instar des brûleurs 125.

La fusion du mélange vitrifiable dans la zone 120 de fusion à flammes ainsi que le chauffage sélectif du verre dans la zone 200 d'affinage sont obtenus par les flammes délivrées respectivement par les brûleurs 125 aériens et les brûleurs 215 alimentés à cet effet en combustible, lesquelles flammes se développent par combustion au-dessus de la surface S du verre.

C'est la raison pour laquelle les brûleurs 125 ou 215 sont appelés « aériens » et cela par opposition notamment aux brûleurs dits « immergés » correspondant à une toute autre technologie.

La délimitation entre la zone 120 de fusion à flammes et la zone 200 d'affinage telle que notée sur les figures est indicative et nullement limitative. En effet, la délimitation n'est pas une ligne fixe mais variable en fonction notamment de la tirée et du mode de fonctionnement du four, ladite délimitation correspondant par convention à la ligne de séparation entre la présence et l'absence de mélange vitrifiable sur la surface du bain de verre.

Avantageusement, la zone 120 de fusion à flammes s'étend, suivant l'axe longitudinal (A-A') du four, sur une longueur (L) qui détermine en outre la tirée maximale susceptible de pouvoir être produite par ladite zone 120 de fusion à flammes.

On décrira maintenant, après la zone 100 de fusion, la zone 200 d'affinage et la zone 300 de refroidissement du four hybride 10 selon le premier mode de réalisation illustré par les figures 1 et 2.

La zone 200 d'affinage du four hybride 10 est configurée pour éliminer les bulles (ou défauts gazeux) présentes dans le verre fondu provenant de la zone 100 de fusion électrique et/ou de la zone 120 de fusion à flammes afin d'obtenir un verre qui soit de haute qualité et ce faisant avantageusement apte à alimenter une unité de flottage du verre.

Pour ce faire, la zone 200 d'affinage est configurée pour comporter une première courroie 210 de convection, dite boucle de recirculation amont, et une deuxième courroie 220 de convection, dite boucle de recirculation aval.

De préférence, la première courroie 210 de convection, dite boucle de recirculation amont, est longitudinalement plus courte que la deuxième courroie 220 de convection comme illustré par la figure 1.

Avantageusement, les courants de convection dans le verre correspondant auxdites courroies 210, 220 opèrent un brassage favorisant l'élimination des bulles et augmentant le temps de séjour du verre dans la zone 200 d'affinage ce qui participe à l'obtention d'un verre de haute qualité.

Avantageusement, la zone 120 de fusion à flammes du four hybride 10 est parcourue par ladite première courroie 210 de convection de la zone 200 d'affinage.

Dans le deuxième mode de fonctionnement hybride, la première courroie 210 de convection participe donc également au mélange du verre fondu respectivement délivré par la zone 110 de fusion électrique et par la zone 120 de fusion à flammes qui sont utilisées conjointement.

La première courroie 210 de convection et la deuxième courroie 220 de convection sont séparées par une zone 230 d'inversion des courroies 210, 220 qui est déterminée par un point chaud (appelé aussi « point source ») correspondant au point le plus chaud du verre dans la zone 200 d'affinage, généralement à une température supérieure à 1500°C.

Avantageusement, les brûleurs 215 sont agencés sous une voûte 240 de la zone 200 d'affinage pour obtenir ledit point chaud déterminant la zone 230 d'inversion desdites courroies 210, 220.

Dans la zone 200 d'affinage du four, une partie de l'énergie thermique dégagée par la combustion est transmise directement au verre par rayonnement et convection, une autre partie est transmise par la voûte 240 qui la restitue au verre par rayonnement, et qui notamment pour cette raison est appelée « voûte chaude ».

Avantageusement, le four hybride 10 comporte un muret 260 dans la zone 230 d'inversion des courroies. De préférence, le muret 260 s'étend verticalement depuis une sole 250 de la zone 200 d'affinage.

Tel qu'illustré par la figure 1, le muret 260 comporte une partie sommitale qui, immergée en dessous de la surface S du verre, détermine le passage du verre de la première courroie 210 de convection, dite boucle de recirculation amont, vers la deuxième courroie 220 de convection, dite boucle de recirculation aval.

De préférence, le four hybride 10 comporte des moyens de modulation (non représentés) tels que du « boosting » électrique et/ou des bouillonneurs qui, agencés dans la zone 120 de fusion à flammes et/ou la zone 200 d'affinage, sont aptes à permettre de moduler la convection desdites courroies 210, 220 afin de faciliter la conduite de la fabrication du verre.

Avantageusement, les moyens de modulation comportent donc selon le terme anglais du « boosting » électrique, c'est-à-dire des moyens de chauffage électrique d'appoint comportant des électrodes et/ou des bouillonneurs, c'est-à-dire un système d'injection d'au moins un gaz, tel que de l'air ou de l'azote, au niveau de la sole dont les bulles créent alors un mouvement ascensionnel du verre.

De préférence, le four hybride 10 comporte au moins une variation 270 de la profondeur, par rapport à la surface S du verre, de la sole 250 de la zone 200 d'affinage.

La variation 270 de profondeur est située dans la partie comprenant la première courroie 210 de convection et/ou dans la partie comprenant la deuxième courroie 220 de convection.

Avantageusement, la variation 270 de la profondeur de verre est par exemple constituée par au moins une élévation de la sole 250 illustrée par la figure 1. En variante, la variation 270 de la profondeur est constituée par au moins une dénivellation de la sole 250.

L'élévation de la sole 250 formant la variation 270 de profondeur, soit ici une réduction de la profondeur, est par exemple constituée par au moins une marche 272, voire deux marches.

La variation 270 de profondeur peut s'effectuer plus ou moins progressivement, par exemple par une portion droite 274 dans le cas de celle située en amont du muret 260 ou en variante par une portion inclinée 276 dans le cas d'une marche 322 située en aval du muret 260, à la jonction de la zone 200 d'affinage et de la zone 300 de refroidissement du verre.

De préférence, la zone 300 de refroidissement comporte également une variation 370 de profondeur qui est formée par une élévation comportant par exemple la marche 322 à laquelle la portion inclinée 276 conduit depuis la sole 250 et une autre marche 332, en aval de ladite marche 322. La marche 322 se raccorde également de manière progressive à l'autre marche 332 par une portion 376 inclinée.

En variante, les portions respectivement droite et inclinée qui viennent d'être décrites en référence à la figure 1 pourraient être inversées entre les marches 272 d'une part et les marches 322, 332 d'autre part, ou encore n'être que d'un seul et même type, c'est-à-dire soit droites, soit inclinées.

Tel qu'illustré par la figure 1 et ainsi qu'il vient d'être décrit avec les marches 322 et 332 successives, la zone 300 de refroidissement comporte une sole 350 qui est configurée de manière que la profondeur par rapport à la surface S de verre diminue progressivement de l'amont vers l'aval, depuis le muret 260.

La zone 300 de refroidissement du verre du four hybride 10 est parcourue par la deuxième courroie 220 de convection, dite boucle de recirculation aval.

La zone 300 de refroidissement est formée par un bassin 310 de conditionnement qui communique avec au moins un canal 400 d'écoulement qui est par exemple destiné à alimenter en verre de haute qualité une zone de formage située en aval et préférentiellement constituée par une unité de flottage du verre sur un bain de métal fondu (non représentée).

Avantageusement, le bassin 310 de conditionnement de la zone 300 de refroidissement comprend, d'amont en aval, un autre corset 320, dit second corset, puis une braise 330.

Avantageusement, l'atmosphère de la zone 200 d'affinage et l'atmosphère plus froide de la zone 300 de refroidissement sont séparées l'une de l'autre par un écran thermique 360 s'étendant verticalement depuis une voûte 340 jusqu'au voisinage de la surface S du verre, préférentiellement sans tremper dans le verre.

Avantageusement, dans tout plan vertical transversal à l'axe longitudinal A-A' du four hybride 10, il existe dans le bassin 310 de conditionnement des points dans le verre ayant une composante de vitesse longitudinale allant de l'aval vers l'amont.

Après le bassin 310 de conditionnement, aucun courant de retour n'a lieu dans un canal 400 d'écoulement destiné à alimenter en verre la zone de formage, dit autrement l'écoulement du verre dans le canal 400 est un écoulement de type « piston ».

Avantageusement, le four hybride 10 selon l'invention est apte à délivrer un verre de haute qualité présentant moins de 0,1 bulle par litre, préférentiellement moins de 0,05 bulle par litre, un tel verre de haute qualité convenant tout particulièrement pour alimenter une unité de flottage destinée à fabriquer du verre plat.

Avantageusement, le four hybride 10 est apte à alimenter une unité de flottage du verre sur un bain de métal fondu avec une tirée nominale supérieure ou égale à 400 tonnes par jour, préférentiellement comprise entre 600 et 900 tonnes par jour, voire de 1000 tonnes par jour ou plus, et cela avec un verre de haute qualité présentant moins de 0,1 bulle par litre.

De préférence, le four hybride 10 de fabrication de verre selon l'invention alimente par l'intermédiaire dudit canal 400 d'écoulement une unité de flottage du verre sur un bain de métal fondu, par exemple de l'étain, destinée à la fabrication de verre plat.

Selon l'invention et tel que décrit précédemment, le four hybride 10 selon le premier mode de réalisation se caractérise en outre par le fait de comporter une zone 110 de fusion électrique et une zone 120 de fusion à flammes qui étant aptes à fonctionner indépendamment l'une de l'autre confèrent audit four hybride 10 une flexibilité énergétique.

Dans un four hybride 10 selon l'invention, la flexibilité énergétique se rapporte à l'énergie utilisée pour l'étape de fusion du mélange vitrifiable qui est la plus énergivore du processus d'élaboration du verre.

Avantageusement, les électrodes 115 constituent les moyens de chauffe de la zone 110 de fusion électrique permettant d'obtenir la fusion du mélange vitrifiable tandis que les brûleurs 125 constituent préférentiellement les seuls moyens de chauffe de la zone 120 de fusion à flammes. En variante, lesdits brûleurs 125 constituent les principaux moyens de chauffe dans le cas d'une utilisation de moyens de chauffage électrique d'appoint (dits « boosting ») comportant des électrodes immergées.

Grâce à cette conception de la zone 100 de fusion du four hybride 10, il est en effet possible de choisir l'un des trois modes de fonctionnement précités, à savoir le premier mode de fonctionnement à fusion électrique, le deuxième mode de fonctionnement dit hybride et le troisième mode de fonctionnement à fusion par flammes.

Avantageusement, la zone 110 de fusion électrique est apte à délivrer une tirée maximale qui est inférieure ou égale à la tirée nominale du four, c'est-à-dire comprise entre 0% et 100% de la tirée nominale.

De préférence, la zone 110 de fusion électrique est apte à délivrer une tirée maximale allant jusqu'à 100% afin de pouvoir obtenir ladite tirée nominale uniquement par une fusion électrique, typiquement dans le premier mode de fonctionnement.

Avantageusement, la zone 120 de fusion à flammes est apte à délivrer une tirée maximale qui est inférieure ou égale à la tirée nominale du four, c'est-à-dire comprise entre 0 et 100% de la tirée nominale, préférentiellement jusqu'à 100% afin de pouvoir obtenir ladite tirée nominale uniquement par une fusion par flammes, typiquement dans le troisième mode de fonctionnement.

De préférence, la zone 120 de fusion à flammes est apte à délivrer une tirée maximale qui est comprise entre 0 et 50% de la tirée nominale. Par conséquent, l'obtention de la tirée nominale nécessite alors d'utiliser conjointement la zone 110 de fusion électrique avec la zone 120 fusion à flammes pour atteindre 100%, tel sera le cas dans le deuxième mode de fonctionnement hybride.

Dans un four hybride 10 selon l'invention, l'énergie utilisée pour la fusion du mélange vitrifiable dépendra donc du mode de fonctionnement sélectionné lequel mode peut notamment être déterminé en fonction de la tirée souhaitée par rapport à la tirée nominale du four hybride 10.

De préférence, la fusion du mélange vitrifiable est réalisée en tout ou en partie dans la zone 110 de fusion électrique du four hybride 10 de sorte que la fusion est ainsi obtenue soit uniquement avec de l'énergie électrique selon le premier mode de fonctionnement à fusion électrique, soit principalement avec de l'énergie électrique en combinaison avec un combustible selon le deuxième mode de fonctionnement hybride.

Avantageusement, l'électricité représente plus de 60%, voire 80% et même plus, de l'énergie totale utilisée dans le four hybride 10 pour le processus d'élaboration du verre et tout particulièrement pour la fusion du mélange vitrifiable, étape du processus la plus énergivore.

En effet et comme expliqué en préambule, on recherche encore et toujours à réduire l'empreinte carbone du processus d'élaboration du verre.

Ainsi lorsque l'énergie combustible est une énergie fossile telle que du gaz naturel et que par comparaison l'énergie électrique est en tout ou en partie une électricité « verte » obtenue à partir d'énergies renouvelables et décarbonées, on privilégiera alors généralement l'électricité au moins pour cette raison.

Toutefois et bien que l'électricité puisse être privilégiée en tant qu'énergie pour la fusion, le four hybride 10 n'en offre pas moins également un troisième mode de fonctionnement à fusion par flammes utilisant un combustible ce qui offre la garantie de toujours pouvoir fabriquer du verre, y compris par exemple en cas de problème d'approvisionnement en électricité, évitant tout arrêt forcé du four hybride 10.

De manière connue, le four hybride 10 peut comporter des régénérateurs en matériaux réfractaires fonctionnant (par exemple par paires et en inversion) ou encore des échangeurs métalliques qui utilisent respectivement la chaleur contenue dans les fumées issues de la fabrication pour réaliser un préchauffage des fluides (combustible et comburant) alimentant les brûleurs 125 et/ou 215 et ainsi en améliorer la combustion.

Les brûleurs 125 aériens (et les brûleurs 215) produisent une flamme par combustion qui peut être obtenue en associant différents types de combustible et de comburant mais dont le choix a en outre des conséquences directes dans le bilan carbone de la fabrication du verre, soit les émissions directes et indirectes de gaz à effet de serre qui sont liées à la fabrication du produit, notamment les émissions de dioxyde de carbone (CO₂).

Cependant, si le combustible le plus souvent utilisé dans les brûleurs 125 est du gaz, il est possible d'améliorer encore le bilan carbone du processus de fabrication du verre en utilisant un biocombustible (en anglais « green-fuels ») en particulier un « biogaz », préférentiellement du « bio-méthane » (CH₄).

Par « biogaz », on entend un gaz composé essentiellement de méthane et de dioxyde de carbone qui est produit par méthanisation, soit la fermentation de matières organiques en l'absence d'oxygène.

On utilisera encore plus préférentiellement de l'hydrogène (H₂) comme combustible car, par comparaison à un biogaz, il ne comporte avantageusement pas de carbone, or sans carbone pas d'émission de dioxyde de carbone (CO₂).

Pour la combustion opérée dans les brûleurs 125 et aussi 215, on utilise généralement l'oxygène présent dans l'air comme comburant, lequel air peut toutefois être enrichi en oxygène afin d'obtenir un air suroxygéné, voire on utilise quasiment de l'oxygène pur dans le cas particulier d'une oxycombustion.

Tel qu'indiqué précédemment, un préchauffage des fluides (combustible et comburant) alimentant les brûleurs 125, 215 est susceptible d'être réalisé pour améliorer la combustion, notamment à l'aide d'échangeurs métalliques utilisant la chaleur contenue dans les fumées issues de la fabrication.

Avantageusement, la flexibilité énergétique obtenue avec un four hybride 10 selon l'invention est donc totale, permettant en outre de choisir tant la ou les énergies utilisées pour la fusion, que la proportion dans laquelle on les utilise.

Avantageusement, la sélection de l'un des trois modes de fonctionnement du four hybride 10 est par exemple fonction d'au moins un paramètre de sélection comportant :
- un critère économique qui est fonction du coût respectif de l'énergie électrique et du combustible destinés en outre à la fusion du mélange vitrifiable ;
- un critère écologique qui est fonction de l'empreinte carbone (CO₂) respectivement associée à l'énergie électrique et audit combustible, et
- au moins un critère technique qui est fonction de la tirée à produire par rapport à la quantité de verre fondu susceptible d'être respectivement obtenue au moyen de ladite au moins une zone 110 de fusion électrique et/ou de la zone 120 de fusion à flammes et/ou encore fonction de la composition du verre à fabriquer, voire aussi du taux de calcin dans le mélange vitrifiable.

Avantageusement, le four hybride 10 est apte à être piloté par une unité de commande (UC) associée, notamment apte à être piloté par l'unité de commande (UC) pour sélectionner selon au moins l'un des paramètres de sélection précités l'un des modes de fonctionnement respectivement illustrés par les figures 5 à 7 qui seront décrites ci-après.

La figure 5 illustre le four hybride 10 selon le premier mode de réalisation dans le premier mode de fonctionnement à fusion électrique.

Dans ce mode de réalisation à fusion électrique, le verre est uniquement produit dans la zone 110 de fusion électrique au moyen des électrodes 115, ladite zone 110 étant à cet effet alimentée en mélange vitrifiable par le premier dispositif 610 d'enfournement.

Le deuxième dispositif 620 d'enfournement associé à la zone 120 de fusion à flammes est à l'arrêt, c'est la raison pour laquelle la flèche l'illustrant schématiquement a été représentée en trait pointillé.

Comme on peut le voir sur la figure 5, le mélange vitrifiable est avantageusement réparti uniformément sur la surface du bain 113 de verre en une couche 112 qui est retenue par les moyens 176 de blocage décrits précédemment afin de ne pas pénétrer dans le corset 160.

Dans ce premier mode de fonctionnement à fusion électrique, en l'absence de fusion par flammes au moyen de brûleurs 125 aériens, le deuxième dispositif 620 d'enfournement est à l'arrêt, aucun mélange vitrifiable n'est ainsi délivré dans ladite zone 120 de fusion à flammes.

Le verre fondu produit dans la zone 110 de fusion électrique s'écoule longitudinalement de l'amont vers l'aval, le dispositif 170 de séparation agencé au niveau du corset 160 empêchant avantageusement tout retour du verre vers la zone 110 de fusion électrique.

Ainsi, le verre fondu s'écoule depuis la zone 110 de fusion électrique à travers le corset 160 jusqu'à atteindre la zone 120 de fusion à flammes, puis la zone 200 d'affinage où le verre est affiné en circulant suivant la première courroie 210 de convection.

Dans le premier mode de fonctionnement à fusion électrique si aucun combustible n'est utilisé dans les brûleurs 125 pour obtenir la fusion du mélange vitrifiable, un chauffage du verre en surface par flammes au moyen de l'un au moins des brûleurs 215 est toutefois réalisé sélectivement dans ladite zone 200 d'affinage pour obtenir le point chaud de manière à parfaire l'affinage et l'homogénéisation du verre par élimination des bulles (ou défauts gazeux) présentes dans le verre fondu.

Avantageusement, en réglant la puissance d'une partie dudit au moins un brûleur 215 situé en aval au voisinage du muret 260, on peut ajuster la distribution longitudinale des températures et donc la position du point chaud qui est un paramètre important de la conduite du four.

Le verre va ensuite franchir ledit muret 260 au niveau de la zone 230 d'inversion des courroies, passant de la première courroie 210 de convection à la deuxième courroie 220 de convection, et parcourir la zone 300 de refroidissement suivant ladite deuxième courroie 220 de convection.

Dans la zone 300 de refroidissement, le verre circulant suivant ladite deuxième courroie 220 de convection passe par le second corset 320 puis la braise 330 avant finalement de sortir du four hybride 10 par le canal 400 d'écoulement du verre.

La figure 6 illustre le four hybride 10 selon le premier mode de réalisation dans le deuxième mode de fonctionnement hybride qui sera décrit ci-après par comparaison avec la figure 5.

Dans ce deuxième mode de fonctionnement hybride du four, on utilise simultanément la zone 110 de fusion électrique et la zone 120 de fusion à flammes pour obtenir le verre fondu et par conséquent deux sources d'énergie différentes, respectivement de l'électricité et un combustible.

Toutefois, la proportion d'électricité et de combustible est avantageusement librement paramétrable, en fonction des critères de sélection précités notamment et dans la limite de la tirée maximale que chaque zone 110, 120 de fusion est susceptible de produire par rapport à la tirée nominale du four hybride 10.

Ainsi, l'électricité utilisée pour alimenter les électrodes 115 et le combustible pour alimenter les brûleurs 125 aériens peuvent intervenir à part égale, soit dans un rapport de 50/50, ou encore tout autre rapport.

De préférence, l'électricité est prépondérante par rapport au combustible, par exemple avec un rapport de 60/40, voire un rapport de 80/20 (soit 80% d'électricité et 20% de combustible).

En variante, on pourrait également privilégier le combustible par rapport à l'électricité, en particulier pour des raisons écologiques selon leur empreinte carbone (CO₂) respective, tel serait par exemple le cas d'un combustible avantageusement formé par de l'hydrogène (H2), voire un biogaz, alors que l'électricité n'aurait pas été produite à partir d'énergies renouvelables et décarbonées mais d'une énergie fossile comme le charbon.

Tel qu'illustré par la figure 6, du mélange vitrifiable est présent dans la zone 110 de fusion électrique et dans la zone 120 de fusion à flammes, chacune étant respectivement alimentée par le premier dispositif 610 d'enfournement et par le deuxième dispositif 620 d'enfournement comportant la première enfourneuse 622 et la deuxième enfourneuse 624 qui sont agencées transversalement dans ce premier mode de réalisation.

Le verre fondu produit par la zone 110 de fusion électrique s'écoule à travers le corset 160 tel que décrit précédemment pour la figure 5 mais ce verre fondu vient ensuite se mélanger dans la zone 120 de fusion à flammes avec le verre fondu produit par celle-ci, le verre fondu résultant de ce mélange va alors circuler suivant la première courroie 210 de convection jusqu'à la zone 200 d'affinage.

Grâce à l'agencement en série de la zone 110 de fusion électrique et de la zone 120 de fusion à flammes, le verre fondu produit par ladite zone 110 s'écoule dans ladite zone 120 de fusion à flammes située en aval pour s'y mélanger.

Avantageusement, le corset 160 comportant le dispositif 170 de séparation, voire les moyens 500 de refroidissement tels que le dispositif 510 de refroidissement par circulation d'air, permettent en outre de contrôler cet écoulement, notamment la température du verre.

Le parcours du verre fondu depuis la zone 200 d'affinage jusqu'au canal 400 passant par la zone 300 de refroidissement est identique à celui qui a été décrit précédemment en référence à la figure 5 de sorte que l'on s'y reportera avantageusement, sans qu'il soit nécessaire de le répéter à nouveau ici.

La figure 7 illustre le four hybride 10 selon le premier mode de réalisation dans le troisième mode de fonctionnement à fusion par flammes qui sera décrit ci-après par comparaison avec celui de la figure 6.

Dans ce troisième mode de fonctionnement, le verre fondu est uniquement produit par la zone 120 de fusion à flammes, la zone 110 de fusion électrique non utilisée n'est en conséquence pas alimentée en mélange vitrifiable par le premier dispositif 610 d'enfournement qui est à l'arrêt comme illustré par la flèche en trait pointillé.

C'est la raison pour laquelle sur la figure 7, aucune couche 112 de mélange vitrifiable n'est visible dans ladite zone 110 de fusion électrique par comparaison aux figures 5 et 6 décrites précédemment.

Le mélange vitrifiable est introduit transversalement de part et d'autre dans ladite zone 120 de fusion à flammes respectivement par la première enfourneuse 622 et par la deuxième enfourneuse 624 formant ledit deuxième dispositif 620 d'enfournement du four hybride 10.

La fusion dudit mélange vitrifiable est obtenue grâce aux flammes produites par les brûleurs 125 lors de la combustion du combustible constitué avantageusement par de l'hydrogène (H2), voire un biogaz tel que du bio-méthane (CH4).

Le verre fondu obtenu circule suivant la première courroie 210 de convection s'étendant longitudinalement entre ladite zone 120 de fusion à flammes et la zone 200 d'affinage.

Avantageusement, le verre fondu demeure dans la zone 120 de fusion à flammes sans pénétrer dans le corset 160 situé en amont, c'est-à-dire en direction de la zone 110 de fusion électrique, grâce notamment au dispositif 170 de séparation anti-retour du verre.

Selon les exemples de réalisation illustrés par les figures 3 et 4 et décrit précédemment, le dispositif 170 de séparation anti-retour du verre comporte avantageusement un barrage 172 apte à être en partie immergé dans le verre fondu et/ou au moins une élévation 161 de la sole 165 du corset 160.

L'absence de fusion électrique dans ce troisième mode de fonctionnement par flammes n'emporte pas nécessairement un arrêt complet de la zone 110 de fusion électrique.

De préférence, les électrodes 115 demeurent alimentées en électricité pour maintenir une température supérieure à la température de dévitrification dans la zone 110 de fusion électrique. Toutefois, en l'absence d'introduction de toute matière vitrifiable par le premier dispositif 610 d'enfournement, il n'y a pas de fabrication de verre fondu.

Avantageusement, le maintien d'une telle température dans la zone 110 de fusion électrique correspond ainsi à une mise en veille permettant un changement de mode de fonctionnement plus rapide, que cela soit vers le premier mode de fonctionnement à fusion électrique ou le deuxième mode de fonctionnement hybride.

En variante, lorsqu'un fonctionnement selon ledit troisième mode est envisagé pour une longue durée, il peut alors être envisagé de procéder à un arrêt de la zone 110 de fusion électrique. De préférence, un moyen tel qu'un barrage 172 est alors disposé dans le corset 160 pour maintenir le verre dans la zone 120 de fusion à flammes.

Comme précédemment pour la figure 6, le parcours du verre fondu depuis la zone 200 d'affinage jusqu'au canal 400 en passant par la zone 300 de refroidissement est identique à celui qui a été décrit précédemment en référence à la figure 5 de sorte que l'on s'y reportera avantageusement.

On décrira ci-après, par comparaison avec le premier mode de réalisation, un deuxième mode de réalisation du four hybride 10 selon l'invention tel qu'illustré par les figures 8 à 12.

Dans ce deuxième mode de réalisation, le four hybride 10 comporte une zone 100 de fusion comportant au moins une première zone 110A de fusion électrique et une deuxième zone 110B de fusion électrique.

Dans ce deuxième mode de réalisation, le four hybride 10 comporte préférentiellement deux zones de fusion électrique, respectivement 110A et 110B, en variante le four hybride 10 pourrait comporter plus de deux zones de fusion électrique.

Par comparaison avec le premier mode dans lequel le four hybride 10 comporte une unique zone 110 de fusion électrique, le fait d'avoir au moins deux zones de fusion électrique voire plus selon ce deuxième mode de réalisation présente en outre différents avantages.

En fonction de la tirée à délivrer en fusion électrique, il est avantageusement possible de choisir de n'utiliser que l'une des zones 110A et 110B de fusion électrique.

De plus, il est aussi possible par exemple de n'utiliser que l'une des zones de fusion lorsqu'une opération de maintenance ou autre intervention doit être effectuée dans l'autre desdites zones de fusion électrique.

Avantageusement, lesdites zones 110A et 110B de fusion électrique sont destinées à être utilisées ensemble.

Avantageusement, les deux zones 110A et 110B de fusion électrique sont de conception analogue à la zone 110 de fusion électrique décrite précédemment pour le premier mode de réalisation et ne seront donc pas décrites en détails.

Ainsi, les deux zones 110A et 110B de fusion électrique du four hybride 10 comportent en outre des électrodes 115 qui sont par exemple ici au nombre de six dans chaque zone tel qu'illustré par la figure 9.

Dans ce deuxième mode de réalisation, lesdites zones 110A et 110B présentent en effet chacune une moindre surface que celle de ladite zone 110 de fusion du premier mode de réalisation.

De préférence, les électrodes 115 sont agencées en surface de manière à plonger dans le mélange vitrifiable, les électrodes 115 plongeantes s'étendant verticalement.

De préférence, lesdites zones 110A et 110B de fusion électrique sont aptes à délivrer une tirée supérieure ou égale à celle de la zone 110 de fusion électrique du premier mode de réalisation.

Avantageusement, lesdites zones 110A et 110B de fusion électrique sont aptes à délivrer une tirée maximale qui est inférieure ou égale à la tirée nominale du four, c'est-à-dire comprise entre 0% et 100% de la tirée nominale, préférentiellement jusqu'à 100% afin de pouvoir obtenir ladite tirée nominale uniquement par une fusion électrique.

Tel qu'illustré par la figure 9, la première zone 110A de fusion électrique et la deuxième zone 110B de fusion électrique sont agencées transversalement de part et d'autre de la zone 120 de fusion à flammes.

De préférence, la première zone 110A de fusion électrique et la deuxième zone 110B de fusion électrique sont agencées orthogonalement à l'axe longitudinal (A-A') du four.

Avantageusement, le premier dispositif 610 d'enfournement comporte une première enfourneuse 612 pour alimenter en mélange vitrifiable la première zone 110A de fusion électrique et une deuxième enfourneuse 614 pour alimenter en mélange vitrifiable la deuxième zone 110B de fusion électrique.

On a représenté schématiquement la première enfourneuse 612 et la deuxième enfourneuse 614 par des flèches sur les figures 9 à 12. La première enfourneuse 612 et la deuxième enfourneuse 614 sont agencées transversalement pour alimenter en mélange vitrifiable respectivement la première zone 110A de fusion électrique et la deuxième zone 110B de fusion électrique.

Avantageusement, la première enfourneuse 612 et la deuxième enfourneuse 614 formant le premier dispositif 610 d'enfournement sont configurées pour répandre le mélange vitrifiable en une couche 112 uniforme sur la surface du bain 113 de verre fondu dans chacune desdites première et deuxième zones 110A et 110B de fusion électrique.

Avantageusement, lesdites zones 110A et 110B de fusion électrique et ladite zone 120 de fusion à flammes sont agencées en série de manière que le verre fondu produit par chacune desdites zones 110A et 110B de fusion s'écoule dans la zone 120 de fusion à flammes située en aval.

La première zone 110A de fusion électrique et la deuxième zone 110B de fusion électrique sont respectivement reliées à la zone 120 de fusion à flammes par un premier corset 160A et par un deuxième corset 160B.

Avantageusement, le premier corset 160A et le deuxième corset 160B sont identiques au corset 160 selon le premier mode de réalisation et ne seront donc pas décrits plus en détails.

Avantageusement, le four hybride 10 comporte un dispositif 170 de séparation anti-retour du verre dans chacun desdits corsets 160A et 160B.

De préférence, chaque dispositif 170 de séparation comporte au moins une élévation 161 de la sole 165 telle que décrite en référence à la figure 3 du premier mode de réalisation.

Avantageusement, le four hybride 10 comporte également dans chacun desdits premier corset 160A et deuxième corset 160B un moyen 174 de séparation atmosphérique et des moyens 176 de blocage aptes à retenir le mélange vitrifiable.

Avantageusement, le four hybride 10 comporte des moyens 500 de refroidissement, de préférence un dispositif 510 de refroidissement par circulation d'air qui, identique à celui décrit précédemment pour le premier mode de réalisation, n'est pas représenté schématiquement sur les figures 8 à 12.

De préférence, ledit deuxième dispositif 620 d'enfournement destiné à alimenter ladite zone 120 de fusion à flammes en mélange vitrifiable comporte au moins une enfourneuse comportant une vis sans fin.

Tel qu'illustré par la figure 9, le deuxième dispositif 620 d'enfournement est agencé longitudinalement en regard du four, c'est-à-dire suivant l'axe longitudinal (A-A') du four, en amont de la zone 120 de fusion à flammes.

A l'exception du dispositif 620 d'enfournement de mélange vitrifiable, le four hybride 10 selon le deuxième mode de réalisation comporte une zone 120 de fusion à flammes qui, comportant des brûleurs 125 aériens, est identique à celle décrite précédemment pour le premier mode de réalisation à la description duquel on se reportera par conséquent.

Le four hybride 10 comporte une zone 200 d'affinage et une zone 300 de refroidissement qui sont respectivement identiques à celles du premier mode de réalisation à la description duquel on se reportera donc avantageusement, les mêmes signes de référence ayant été repris à cette fin sur les figures 8 à 12 illustrant le deuxième mode de réalisation.

Dans ce deuxième mode de réalisation illustré par les figures 8 à 12, la première zone 110A de fusion électrique et la deuxième zone 110B de fusion électrique sont agencées transversalement de part et d'autre de la zone 120 à fusion à flammes.

En variante, la première zone 110A de fusion électrique et la deuxième zone 110B de fusion électrique sont agencées longitudinalement en amont de la zone 120 de fusion à flammes, l'une à côté de l'autre, avec un corset 160A, 160B s'étendant parallèlement à l'axe longitudinal (A-A') du four ou obliquement, c'est-à-dire formant un angle aigu donné par rapport audit axe longitudinal (A-A').

Dans une telle variante de réalisation, le deuxième dispositif 620 d'enfournement est agencé transversalement, de préférence orthogonalement par rapport à l'axe longitudinal (A-A'), par rapport à la zone 120 de fusion à flammes.

De préférence, le deuxième dispositif 620 d'enfournement comporte alors une première enfourneuse 622 et une deuxième enfourneuse 624 comme dans le premier mode de réalisation illustré sur la figure 2, c'est-à-dire agencées transversalement de part et d'autre de la zone 120 de fusion à flammes à alimenter en mélange vitrifiable, orthogonalement à l'axe longitudinal (A-A') du four.

Avantageusement, le four hybride 10 selon le deuxième mode de réalisation est apte à fonctionner selon plusieurs modes de fonctionnement grâce à quoi une flexibilité énergétique est en outre obtenue.

Comme pour le premier mode de réalisation, le four hybride 10 présente respectivement un premier mode de fonctionnement à fusion électrique, un deuxième mode de fonctionnement hybride et un troisième mode de fonctionnement à fusion par flammes.

Avantageusement, le four hybride 10 est apte à être piloté par une unité de commande (UC), représentée schématiquement sur la figure 8, afin notamment de sélectionner l'un desdits modes de fonctionnement selon au moins l'un des paramètres de sélection décrits précédemment, à savoir un critère économique, un critère écologique et au moins un critère technique.

La figure 11 illustre le four hybride 10 selon le deuxième mode de réalisation de l'invention dans le deuxième mode de fonctionnement à fusion électrique dans lequel le verre fondu est uniquement produit par fusion électrique, c'est-à-dire avec l'électricité pour énergie, sans recourir à la zone 120 de fusion à flammes.

En conséquence, les brûleurs 125 aériens comme le deuxième dispositif 620 d'enfournement associé à la zone 120 de fusion à flammes sont à l'arrêt ce qu'illustre respectivement l'absence de flammes et l'utilisation du trait pointillé pour la flèche.

Tel qu'illustré sur la figure 11, la première zone 110A de fusion électrique et la deuxième zone 110B de fusion électrique sont recouvertes d'une couche 112 de mélange vitrifiable, de préférence uniformément, laquelle couche 112 est retenue par des moyens 176 de blocage qui s'étendent longitudinalement en amont du premier corset 160A et du deuxième corset 160B.

La première zone 110A de fusion électrique et la deuxième zone 10B de fusion électrique sont ainsi seulement alimentées en mélange vitrifiable, respectivement par la première enfourneuse 612 et par la deuxième enfourneuse 614.

Le verre fondu respectivement produit par la première zone 110A de fusion électrique et par la deuxième zone 110B de fusion électrique va s'écouler transversalement à travers le premier corset 160A et le deuxième corset 160B jusqu'à la zone 120 de fusion à flammes parcourue par la première courroie 210 de convection de la zone 200 d'affinage.

Le verre fondu parcourt ensuite la zone 200 d'affinage puis la zone 300 de refroidissement jusqu'au canal 400 d'écoulement.

Le premier mode de fonctionnement à fusion électrique dans un four hybride 10 selon ce deuxième mode de réalisation étant pour le reste identique à celui décrit précédemment pour le premier mode en référence à la figure 5, il ne sera par conséquent pas décrit à nouveau plus en détails.

La figure 12 illustre le four hybride 10 selon le deuxième mode de réalisation de l'invention dans le deuxième mode de fonctionnement hybride dans lequel la fusion du mélange vitrifiable est réalisée conjointement dans lesdites première et deuxième zones 110A et 110B de fusion électrique ainsi que dans la zone 120 de fusion à flammes.

Tel qu'illustré sur la figure 12, les deux zones 110A et 110B de fusion électrique et la zone 120 de fusion à flammes sont recouvertes d'une couche 112 de mélange vitrifiable.

La première zone 110A et la deuxième zone 110B de fusion électrique sont respectivement alimentées chacune par la première enfourneuse 612 et par la deuxième enfourneuse 614 tandis que la zone 120 de fusion à flammes est alimentée longitudinalement par le deuxième dispositif 620 d'enfournement agencé en amont du four hybride 10.

Dans ce mode de fonctionnement hybride, une partie du verre fondu produit par la première zone 110A et la deuxième zone 110B de fusion électrique est donc obtenu avec de l'électricité tandis que l'autre partie est obtenue avec un combustible utilisé dans les brûleurs 125 aériens pour produire les flammes illustrées sur la figure 12.

Pour ce deuxième mode de réalisation et contrairement au premier mode, le troisième mode de fonctionnement à fusion par flammes n'a pas été représenté sur une figure.

Par comparaison avec la figure 12 précédente, le mode de fonctionnement à fusion par flammes se distingue par le fait que la fusion est obtenue au moyen des brûleurs 125 aériens, ici uniquement par lesdits brûleurs 125 en l'absence de moyens de chauffage électrique d'appoint (« boosting »), sans utilisation de la première zone 110A et de la deuxième zone 110B de fusion électrique.

Le premier mode de réalisation illustré par les figures 1 à 7 et le deuxième mode de réalisation illustré par les figures 8 à 12 sont donnés uniquement à titre d'exemples non limitatifs de la présente invention.

L'invention concerne un four hydride 10 pour la fabrication de verre, notamment pour alimenter une unité de flottage, ledit four hybride 10 d'axe longitudinal (A-A') comportant en outre :
- au moins une zone 110 de fusion électrique comportant des électrodes 115 qui est apte à être alimentée en mélange vitrifiable par un premier dispositif 610 d'enfournement ;
- une zone 120 de fusion à flammes comportant au moins des brûleurs 125 aériens qui est apte à être alimentée en mélange vitrifiable par un deuxième dispositif 620 d'enfournement, distinct dudit au moins un premier dispositif 610 d'enfournement,
dans lequel ladite au moins une zone 110 de fusion électrique et la zone 120 de fusion à flammes sont configurées pour pouvoir fonctionner indépendamment l'une de l'autre de manière à permettre une utilisation sélective de l'une et/ou l'autre desdites zones de fusion 110, 120 qui confère ainsi au four 10 une flexibilité énergétique.

Avantageusement, le four hybride 10 selon l'invention est apte à alimenter une unité de flottage du verre (non représentée).

Selon un autre aspect, l'invention concerne ainsi un ensemble pour la fabrication de verre plat comportant un four hybride 10 de fabrication de verre et une unité de flottage du verre sur un bain de métal fondu qui, agencée en aval, est alimentée en verre par ledit four 10 par l'intermédiaire dudit au moins un canal 400 d'écoulement.

Selon encore un autre aspect, l'invention concerne un procédé de pilotage d'un four hybride 10 pour la fabrication de verre, en particulier au moyen de l'unité de commande (UC), comportant au moins une étape de détermination du mode de fonctionnement consistant à sélectionner l'un desdits modes de fonctionnement du four en fonction d'au moins un paramètre de sélection tel qu'un critère économique et/ou un critère écologique et/ou au moins un critère technique respectivement décrits précédemment.

Avantageusement, lorsque le deuxième mode de fonctionnement hybride est sélectionné à l'issue de l'étape de détermination, le procédé comporte une étape de détermination supplémentaire consistant ensuite à déterminer la quantité de verre fondu à produire respectivement par ladite au moins une zone 110 de fusion électrique et par la zone 120 de fusion à flammes afin d'obtenir la tirée souhaitée.

Ladite étape de détermination supplémentaire détermine en outre la contribution respective de ladite au moins une zone 110 de fusion électrique et de la zone 120 de fusion à flammes, soit par exemple un rapport de 50/50 ou encore un rapport de 80/20 lorsque l'énergie électrique est privilégiée par rapport au combustible.

De préférence, ladite tirée souhaitée est égale à la tirée nominale du four hybride 10.

Avantageusement, l'unité de commande (UC) détermine les paramètres de pilotage du four correspondant, notamment ceux des électrodes 115 et/ou des brûleurs 125 aériens mais aussi ceux du premier dispositif 610 d'enfournement et/ou du deuxième dispositif 620 d'enfournement afin de régler la quantité de matière vitrifiable à enfourner dans ladite au moins une zone 110 de fusion électrique et/ou dans la zone de fusion 120 à flammes selon le mode de fonctionnement du four et pour obtenir ladite tirée.

## Revendications

1. Four hybride (10) pour la fabrication de verre, notamment pour alimenter une unité de flottage du verre sur un bain de métal fondu, ledit four hybride (10) d'axe longitudinal (A-A') comportant :
- au moins une zone (110) de fusion électrique qui est apte à être alimentée en mélange vitrifiable par au moins un premier dispositif (610) d'enfournement et qui comporte des électrodes (115) pour fondre ledit mélange vitrifiable ;
- une zone (120) de fusion à flammes qui, distincte de ladite au moins une zone (110) de fusion électrique, est apte à être alimentée en mélange vitrifiable par au moins un deuxième dispositif (620) d'enfournement et qui comporte au moins des brûleurs (125) aériens pour fondre ledit mélange vitrifiable, lesdits brûleurs (125) aériens étant agencés au-dessus de la surface (S) du verre fondu,
dans lequel ladite au moins une zone (110) de fusion électrique et ladite zone (120) de fusion à flammes sont configurées pour pouvoir fonctionner indépendamment l'une de l'autre de manière à permettre une utilisation sélective de l'une et/ou l'autre desdites zones de fusion (110, 120) afin de conférer au four une flexibilité énergétique,
- une zone (200) d'affinage du verre fondu délivré par ladite au moins une zone (110) de fusion électrique et/ou ladite zone (120) de fusion à flammes, ladite zone (200) d'affinage étant configurée pour comporter une première courroie (210) de convection et une deuxième courroie (220) de convection ; et
- une zone (300) de refroidissement du verre comportant un bassin (310) de conditionnement qui est parcouru par la deuxième courroie (220) de convection et qui est relié à au moins un canal (400) d'écoulement du verre.

2. Four selon la revendication 1, **caractérisé en ce que** ladite au moins une zone (110) de fusion électrique et ladite zone (120) de fusion à flammes sont agencées en série de manière que le verre fondu produit par l'une (110) desdites zones de fusion située en amont soit susceptible de s'écouler dans l'autre (120) desdites zones de fusion située en aval.

3. Four selon la revendication 1 ou 2, **caractérisé en ce que** ladite au moins une zone (110) de fusion électrique est apte à délivrer une tirée maximale qui est inférieure ou égale à la tirée nominale du four, c'est-à-dire comprise entre 0% et 100% de la tirée nominale, préférentiellement jusqu'à 100% afin de pouvoir obtenir ladite tirée nominale uniquement par une fusion électrique.

4. Four selon l'une des revendications 1 à 3, **caractérisé en ce que** les électrodes (115) sont agencées en surface de manière à plonger dans le mélange vitrifiable, lesdites électrodes (115) plongeantes s'étendant de préférence verticalement.

5. Four selon l'une des revendications 1 à 4, **caractérisé en ce que** ladite zone (120) de fusion à flammes est parcourue par la première courroie (210) de convection de la zone (200) d'affinage.

6. Four selon l'une quelconque des revendications 1 à 5, **caractérisé en ce que** ladite zone (120) de fusion à flammes est apte à délivrer une tirée maximale qui est inférieure ou égale à la tirée nominale du four, c'est-à-dire comprise entre 0 et 100% de la tirée nominale, préférentiellement jusqu'à 100% afin de pouvoir obtenir ladite tirée nominale uniquement par une fusion à flammes, voire encore comprise entre 0 et 50% afin de pouvoir obtenir ladite tirée nominale en utilisant conjointement la fusion à flammes et la fusion électrique.

7. Four selon la revendication 6, **caractérisé en ce que** la zone (120) de fusion à flammes s'étend, suivant l'axe longitudinal (A-A') du four, sur une longueur (L) qui détermine en outre la tirée maximale susceptible d'être produite par ladite zone (120) de fusion à flammes.

8. Four selon l'une quelconque des revendications 1 à 7, **caractérisé en ce que** ladite au moins une zone (110) de fusion électrique est reliée par un corset (160, 160A, 160B) à ladite zone (120) de fusion à flammes.

9. Four selon la revendication 8, **caractérisé en ce que** le four hybride (10) comporte un dispositif (170) de séparation dit anti-retour qui, agencé au niveau du corset (160, 160A, 160B), est apte à empêcher un retour du verre fondu de ladite zone (120) de fusion à flammes vers ladite au moins une zone (110) de fusion électrique.

10. Four selon la revendication 9, **caractérisé en ce que** ledit dispositif (170) de séparation comporte un barrage (172) apte à être en partie immergé dans le verre fondu et/ou au moins une élévation (161) d'une sole (165) du corset (160, 160A, 160B).

11. Four selon l'une quelconque des revendications 8 à 10, **caractérisé en ce que** le four hybride (10) comporte au moins un moyen (174) de séparation atmosphérique qui est apte à séparer l'atmosphère de ladite au moins une zone (110) de fusion électrique, dite à voûte froide, et l'atmosphère de la zone (120) de fusion à flammes, dite à voûte chaude.

12. Four selon l'une quelconque des revendications 8 à 11, **caractérisé en ce que** le four hybride (10) comporte des moyens (176) de blocage qui sont aptes à retenir le mélange vitrifiable dans ladite au moins une zone (110) de fusion électrique de sorte que ledit mélange vitrifiable présent en surface du verre ne pénètre pas dans le corset (160, 160A, 160B).

13. Four selon l'une quelconque des revendications 8 à 12, **caractérisé en ce que** le four hybride (10) comporte des moyens (500) de refroidissement du verre qui sont aptes à refroidir le verre dans le corset (160), en particulier au moins un dispositif (510) de refroidissement par circulation d'air.

14. Four selon l'une quelconque des revendications 1 à 13 pris en combinaison avec la revendication 8, **caractérisé en ce que** le four hybride (10) comporte une zone (110) de fusion électrique, ladite zone (110) de fusion électrique étant reliée à la zone (120) de fusion à flammes située en aval par un corset (160).

15. Four selon la revendication 14, **caractérisé en ce que** le premier dispositif (610) d'enfournement pour alimenter en mélange vitrifiable ladite zone (110) de fusion électrique est configuré pour répandre le mélange vitrifiable en une couche (112) uniforme sur la surface (S) du verre fondu.

16. Four selon l'une des revendications 14 ou 15, **caractérisé en ce que** le deuxième dispositif (620) d'enfournement pour alimenter en mélange vitrifiable ladite zone (120) de fusion à flammes comporte une première enfourneuse (622) et une deuxième enfourneuse (624) qui sont agencées transversalement de part et d'autre de la zone (120) de fusion à flammes, de préférence orthogonalement à l'axe longitudinal (A-A') du four.

17. Four selon l'une quelconque des revendications 1 à 13 prise en combinaison avec la revendication 8, **caractérisé en ce que** le four hybride (10) comporte au moins une première zone (110A) de fusion électrique et une deuxième zone (110B) de fusion électrique, la première zone (110A) de fusion électrique et la deuxième zone (110B) de fusion électrique étant respectivement reliées à la zone (120) de fusion à flammes par un premier corset (160A) et par un deuxième corset (160B).

18. Four selon la revendication 17, **caractérisé en ce que** la première zone (110A) de fusion électrique et la deuxième zone (110B) de fusion électrique sont agencées transversalement de part et d'autre de la zone (120) de fusion à flammes, de préférence agencées orthogonalement à l'axe longitudinal (A-A') du four.

19. Four selon l'une des revendications 17 ou 18, **caractérisé en ce que** ledit premier dispositif (610) d'enfournement comporte une première enfourneuse (612) pour alimenter en mélange vitrifiable la première zone (110A) de fusion électrique et une deuxième enfourneuse (614) pour alimenter en mélange vitrifiable la deuxième zone (110B) de fusion électrique.

20. Four selon l'une quelconque des revendications 17 à 19, **caractérisé en ce que** le deuxième dispositif (620) d'enfournement est agencé longitudinalement en amont de la zone (120) de fusion à flammes.

21. Four selon l'une quelconque des revendications précédentes, **caractérisé en ce que** le mélange vitrifiable introduit dans le four par le premier dispositif d'enfournement associé à ladite au moins une zone (110) de fusion électrique et le mélange vitrifiable introduit dans le four par le deuxième dispositif d'enfournement associé à ladite zone (120) de fusion à flammes présentent une composition similaire.

22. Four selon l'une quelconque des revendications précédentes, **caractérisé en ce que** le four hybride (10) est apte à fonctionner selon plusieurs modes de fonctionnement, ledit mode de fonctionnement du four étant choisi sélectivement parmi :
- un premier mode de fonctionnement à fusion électrique dans lequel le verre fondu est uniquement produit par ladite au moins une zone (110) de fusion électrique ;
- un deuxième mode de fonctionnement hybride dans lequel le verre fondu est produit conjointement par ladite au moins une zone (110) de fusion électrique et par ladite zone (120) de fusion à flammes ;
- un troisième mode de fonctionnement à fusion par flammes dans lequel le verre fondu est uniquement produit par ladite au moins une zone (120) de fusion à flammes.

23. Four selon la revendication 22, **caractérisé en ce que** le four hybride (10) est apte à être piloté par une unité de commande associée pour sélectionner l'un desdits modes de fonctionnement en fonction d'au moins un paramètre de sélection comportant :
- un critère économique qui est fonction du coût respectif de l'énergie électrique et du combustible destinés en outre à la fusion du mélange vitrifiable ;
- un critère écologique qui est fonction de l'empreinte carbone (CO₂) respectivement associée à l'énergie électrique et audit combustible, et
- au moins un critère technique qui est fonction de la tirée à produire par rapport à la quantité de verre fondu susceptible d'être respectivement obtenue au moyen de ladite au moins une zone (110) de fusion électrique et/ou de la zone (120) de fusion à flammes et/ou encore fonction de la composition du verre à fabriquer, voire aussi du taux de calcin dans le mélange vitrifiable.

24. Four selon l'une quelconque des revendications précédentes, **caractérisé en ce que** la première courroie (210) de convection et la deuxième courroie (220) de convection sont séparées par une zone (230) d'inversion des courroies (210, 220) déterminée par un point chaud ou source correspondant au point le plus chaud du verre et **en ce que** la zone (200) d'affinage comporte au moins un brûleur (215) qui est agencé pour obtenir ledit point chaud déterminant ladite zone (230) d'inversion des courroies dans laquelle est agencé un muret (260).

25. Four selon l'une quelconque des revendications précédentes, **caractérisé en ce que** le bassin (310) de conditionnement de la zone (300) de refroidissement comporte, d'amont en aval, un corset (320) puis une braise (330).
